# EUROPÄISCHE PATENTSCHRIFT

(11) **EP 3 112 215 B1**
(45) Veröffentlichungstag und Bekanntmachung des Hinweises auf die Patenterteilung: **10.03.2021**
(21) Anmeldenummer: 16171991.9
(22) Anmeldetag: 30.05.2016
(51) Int. Cl.: B60Q 1/38, F21S 43/14, F21S 43/237, F21S 43/245, F21S 43/20, F21S 43/40, F21V 8/00, F21S 43/247, F21S 43/31

(54) **LICHTLEITERANORDNUNG ZUR ERZEUGUNG VON ZUMINDEST EINER BELEUCHTUNGSFUNKTION UND/ODER SIGNALISIERUNGSFUNKTION EINES KRAFTFAHRZEUGSCHEINWERFERS**
LIGHT GUIDANCE DEVICE FOR CREATING AT LEAST ONE ILLUMINATION FUNCTION AND/OR SIGNALING FUNCTION OF A HEAD LAMP OF A VEHICLE
SYSTEME DE GUIDES DE LUMIERE DESTINE A PRODUIRE AU MOINS UNE FONCTION D'ECLAIRAGE ET/OU UNE FONCTION DE SIGNALISATION D'UN PHARE DE VEHICULE AUTOMOBILE

(30) Priorität: 29.06.2015 AT 505622015
(43) Veröffentlichungstag der Anmeldung: 04.01.2017
(73) Patentinhaber: ZKW Group GmbH, 3250 Wieselburg (AT)
(72) Erfinder: Strohmüller, Alexander, 3370 Ybbs (AT)
(74) Vertreter: Patentanwaltskanzlei Matschnig & Forsthuber OG

(56) Entgegenhaltungen:
- EP-A1- 1 876 426
- EP-A1- 2 851 718
- WO-A1-2015/090535
- DE-A1- 19 904 644
- JP-A- 2014 229 510
- JP-A- 2015 064 997
- US-A1- 2003 095 399

## Beschreibung

Die Erfindung betrifft eine Lichtleiteranordnung zur Erzeugung von zumindest einer Beleuchtungsfunktion und/oder Signalisierungsfunktion eines Kraftfahrzeugscheinwerfers oder von zumindest einer Beleuchtungsfunktion und/oder Signalisierungsfunktion einer Beleuchtungsvorrichtung für einen Kraftfahrzeugscheinwerfer, wobei die Lichtleiteranordnung umfasst:
- ein langgestrecktes Lichtleitelement und
- zumindest eine Primärlichtquelle, wobei Licht der Primärlichtquelle über zumindest einen Einkoppelbereich an einem Ende des Lichtleitelementes in das Lichtleitelement eingekoppelt werden kann,
wobei das Lichtleitelement
- an seiner Vorderseite eine Lichtauskoppelfläche und
- an seiner gegenüberliegenden Rückseite eine Lichtumlenkfläche aufweist, sodass
von der zumindest einen Primärlichtquelle in das Lichtleitelement eingekoppeltes Licht an der Lichtumlenkfläche umgelenkt und über die Lichtauskoppelfläche aus dem Lichtleitelement abgestrahlt wird, sodass eine Primär-Lichtverteilung erzeugt werden kann, und wobei
- entlang der Rückseite des Lichtleitelementes zwei oder mehrere Lichtleitkörper vorgesehen sind,
- wobei jedem Lichtleitkörper zumindest eine Sekundärlichtquelle zugeordnet ist, mit welcher Sekundärlichtquelle Licht in den zugeordneten Lichtleitkörper über einen Lichtleitkörper-Einkoppelbereich eingekoppelt und vorzugsweise parallel-gerichtet werden kann, und wobei
- eingekoppeltes Licht an einer Lichtleitkörper-Umlenkfläche zu einer Lichtleitkörper-Auskoppelfläche umgelenkt wird und aus dieser aus dem Lichtleitkörper austritt, sodass mit jedem Lichtleitkörper eine Sekundär-Lichtverteilung erzeugt werden kann,
und wobei die Lichtleitkörper-Auskoppelflächen der zwei oder mehreren Lichtleitkörper der Rückseite des Lichtleitelementes gegenüber liegen,
und wobei aus einem Lichtleitkörper austretendes Licht über die Rückseite des Lichtleitelementes in dieses eintritt, das Lichtleitelement durchquert und über die Vorderseite des Lichtleitelementes austritt,
und wobei die Sekundärlichtquellen Licht jeweils in einer Hauptabstrahlrichtung emittieren und in die Lichtleitkörper-Einkoppelbereiche einkoppeln können.

Weiters betrifft die Erfindung eine Beleuchtungsvorrichtung für einen Kraftfahrzeugscheinwerfer, wobei die Beleuchtungsvorrichtung zumindest eine solche Lichtleiteranordnung umfasst.

Außerdem betrifft die Erfindung einen Kraftfahrzeugscheinwerfer mit zumindest einer solchen Beleuchtungsvorrichtung bzw. mit zumindest einer solchen Lichtleiteranordnung.

Die Druckschriften WO 2015/090535 A1, EP 2 851 718 A1 und DE 199 04 644 A1 offenbaren bekannte Lichtleiteranordnungen.

Eine eingangs erwähnte Lichtleiteranordnung dient zur Erzeugung einer Kfz-Signalisierungs- bzw. Lichtfunktion, z.B. der Signalisierungs- bzw. Lichtfunktion "Fahrtrichtungsanzeiger". Über das längliche Lichtleitelement wird dabei ein Blinklicht in bekannter Art und Weise erzeugt, über den oder die zusätzlichen Lichtleitkörper kann weiters noch ein sogenannter "Wischblinker" realisiert werden.

Es kann gewünscht sein, dass über dieselbe Lichtaustrittsfläche des Lichtleiters mit, vorzugsweise gleicher Abstrahlrichtung und vorzugsweise gleichem äußerem Erscheinungsbild, auch eine Wischblinker-Funktionalität umgesetzt werden. Dazu müssen die Lichtleitkörper hinter dem Lichtleitelement angeordnet werden. Das Licht aus den Lichtleitkörpern zeigt die Richtung der Fahrtrichtungsänderung an (beginnend von innen nach außen) an, vorzugsweise das Erfüllen der Gesetzesvorgaben mit dem Licht des Lichtleitelements (=Lichtleiters) realisiert.

Mit jedem Lichtleitkörper wird eine definierte Sekundär-Lichtverteilung erzeugt. Dazu durchstrahlen die Lichtleitkörper wie eingangs beschrieben das vor ihnen angeordnete Lichtleitelement. Insbesondere ist es dabei wünschenswert, dass bei einem Betrachten der Lichtleitanordnung von außen bei einem Einschalten der Sekundäroptiken ein optisch durchgehender Eindruck entsteht. Die einzelnen Sekundäroptiken werden in der Regel nicht sofort gleichzeitig eingeschaltet, sondern beginnend bei der Fahrzeug inneren Sekundäroptik werden zuerst diese und dann anschließend der Reihe nach hintereinander die anderen Sekundärlichtquellen dazu eingeschaltet, sodass der Eindruck eines laufenden Lichtes entsteht, wobei der leuchtende Bereich, d.h. die Lichtleitkörper-Lichtauskoppelflächen hinter dem Lichtleitelement durchgehend und nicht abgehackt erscheinen sollen.

Es ist eine Aufgabe der Erfindung, eine eingangs beschriebene Lichtleiteranordnung zu schaffen, mit welcher diese Anforderungen realisiert werden können.

Diese Aufgabe wird mit einer eingangs erwähnten Lichtleiteranordnung dadurch gelöst, dass erfindungsgemäß die Hauptabstrahlrichtungen der Sekundärlichtquellen in einem Nachbarbereich des Lichtleitelementes zu der jeweiligen Sekundärlichtquelle jeweils in etwa der Richtung einer Längsmittelachse des Lichtleitelementes entsprechen, und dass die Lichtleitkörper derart ausgebildet und angeordnet sind, dass benachbarte Lichtleitkörper zumindest im Bereich der Lichtleitkörper-Auskoppelflächen unmittelbar aneinander angrenzen oder in einem geringen Abstand zueinander angeordnet sind, und dass Licht, welches im Lichtleitkörper-Einkoppelbereich eines Lichtleitkörpers von der Lichtleitkörper-Umlenkfläche umgelenkt wird, zumindest teilweise über eine den Lichtleitkörper-Einkoppelbereich begrenzende Lichtleitkörper-Einkoppelbereichsfläche austritt, in den benachbarten Lichtleitkörper eintritt, diesen durchquert und durch das Lichtleitelement durch abgestrahlt wird.

Die Lichtleitkörper haben beispielsweise einen kleinen Abstand von ca. 0,2 mm oder liegen unmittelbar aneinander an, es kann auch vorgesehen sein, dass in letzterem Fall die Lichtleitkörper einstückig ausgebildet sind.

Durch die erfindungsgemäße Anordnung der Sekundärlichtquellen können diese problemlos auf einem gemeinsamen Kühlkörper bzw. auf einem gemeinsamen Träger, welcher vorzugsweise auf einem Kühlkörper angeordnet werden kann, angebracht werden. Um diese vorteilhafte Anordnung der Sekundärlichtquellen beibehalten zu können, sind die Lichtleitkörper zusätzlich auf die erfindungsgemäße Art und Weise angeordnet und ausgebildet, um die oben genannten Ziele der Erfindung erreichen zu können.

Vorzugsweise entspricht die Haupt-Lichtabstrahlrichtung einer Sekundärlichtquelle der Haupt-Lichtausbreitungsrichtung im Lichtleitkörper.

Unter der Formulierung, dass *"die Hauptabstrahlrichtungen der Sekundärlichtquellen in einem Nachbarbereich des Lichtleitelementes zu der jeweiligen Sekundärlichtquelle jeweils in etwa der Richtung einer Längsmittelachse des Lichtleitelementes entsprechen",* ist dabei zu verstehen, dass die Hauptabstrahlrichtung jeder Sekundärlichtquelle in etwa in jene Richtung verläuft, in welcher sich Licht in einem benachbarten Bereich des Lichtleitelementes in diesem fortpflanzt (in das Lichtleitelement eingekoppeltes Licht pflanzt sich in diesem, sofern es nicht ausgekoppelt wird, hauptsächlich in Richtung der Längsmittelachse fort, d.h. die dominierende Komponente des sich im Lichtleiter ausbreitenden Lichtes verläuft in Richtung der Längsmittelachse).

Der benachbarte Bereich (Nachbarbereich) des Lichtleitelementes zu einer Sekundärlichtquelle ergibt sich durch Errichten einer Normalebene auf die Hauptabstrahlrichtung einer Sekundärlichtquelle, vorzugsweise im Bereich der Sekundärlichtquelle, z.B. derart, dass die Normalebene durch diese Sekundärlichtquelle verläuft oder die Normalebene mit einer Lichtemissionsfläche der Sekundärlichtquelle zusammenfällt oder diese berührt oder schneidet. Schneiden dieser Normalebene mit dem Lichtleitelement ergibt einen Bereich in dem Lichtleitelement, welcher Bereich in dem benachbarten Bereich liegt.

Die vorliegende Anordnung eignet sich auch dazu, bei einem bestehenden Blinklicht (realisiert durch das Lichtleitelement, Basisfunktion) eine Wischblinkfunktion als Sonderausstattung zu dieser Basisversion umzusetzen, wobei der Lichtleiter als identer Übernahmeteil aus der Basisversion verwendet werden kann.

Es kann vorgesehen sein, dass die Hauptabstrahlrichtung der Sekundärlichtquellen im jeweiligen Nachbarbereich parallel zu der Längsmittelachse des Lichtleitelementes verläuft, oder dass die Hauptabstrahlrichtung zu der Längsmittelachse unter einem Verkippwinkel ungleich 0° verläuft.

Dadurch kann die Umlenkflächen vom Anfang bis zum Ende hin möglichst gleichmäßig bestrahlt werden, sodass die abgestrahlte Lichtmenge über die gesamte Länge möglichst ident ist.

Beispielsweise ist vorgesehen, dass der Verkippwinkel größer 0° und kleiner 10° ist.

Insbesondere kann der Verkippwinkel größer 0° und kleiner 5° sein, vorzugsweise beträgt der Verkippwinkel ca. 4°.

Es kann vorgesehen sein, dass aneinander angrenzende bzw. nebeneinander liegende Lichtleitkörper-Auskoppelflächen stufenlos ineinander übergehen.

Es kann vorgesehen sein, dass aneinander angrenzende oder nebeneinander liegende Lichtleitkörper-Auskoppelflächen stetig ineinander übergehen.

Im Falle von zueinander beabstandeten Flächen ist darunter zu verstehen, dass die gedachte Fortsetzungsfläche einer der Auskoppelflächen stetig in die andere Auskoppelfläche übergeht.

Beispielsweise ist vorgesehen, dass zumindest bei jenem Lichtleitkörper bzw. jenen Lichtleitkörpern, welcher/welche im Bereich seines/ihrer Lichtleitkörper-Einkoppelbereiche(s) an einen Endbereich eines benachbarten Lichtleitkörpers angrenzt/angrenzen, der Lichtleitkörper-Einkoppelbereich quer zu einer Haupt-Lichtausbreitungsrichtung von der Lichtleiterkörper-Auskoppelfläche beabstandet ist und sich entgegen der Haupt-Lichtausbreitungsrichtung weg erstreckt, sodass zwischen dem Lichtleiterkörper-Einkoppelbereich eines Lichtleitkörpers und dem Lichtleitelement eine Aussparung gebildet ist, in welcher Aussparung der Endbereich des zu dem Lichtleitkörper unmittelbar benachbarten Lichtleitkörpers angeordnet ist.

Dabei können der oder die Lichtleitkörper jeweils aus einem Auskoppelkörper und einem mit diesem, vorzugsweise einstückig, verbundenen Einkoppelkörper, in welchem der Einkoppelbereich ausgebildet ist, bestehen, wobei der Einkoppelkörper von dem Endbereich des Lichtleitkörpers, welcher Endbereich vorzugsweise Teil des Auskoppelkörpers ist, weggerichtet ist und sich der Einkoppelkörper, insbesondere eine den Einkoppelkörper begrenzende Einkoppelkörper-Fläche, in einem Abstand zu einer von dem Endbereich weg gerichteten, gedachten Verlängerung der Auskoppelfläche befindet.

Vorzugsweise richtet der Einkoppelbereich richtet das von der Sekundärlichtquelle abgestrahlte Licht parallel.

Die Einkoppelkörper-Fläche und die Lichtleitkörper-Einkoppelbereichsfläche 11a' sind dabei identisch bzw. beinhaltet erstere Fläche die letztere Fläche.

Der Einkoppelkörper und der Auskoppelkörper sind vorzugsweise, insbesondere bei einstückiger Ausgestaltung, aus demselben Material gebildet. Der Auskoppelkörper weist an einer Seite die Lichtleitkörper-Auskoppelfläche und gegenüberliegend die Lichtleitkörper-Umlenkfläche auf.

Dadurch ergibt sich zwischen dem Lichtleitelement, dem Einkoppelkörper eines Lichtleitkörpers und dem Auskoppelkörper eine Aussparung bzw. ein Freiraum, in welchem der benachbarte Lichtleitkörper mit seinem Endbereich angeordnet wird.

Es kann vorgesehen sein, dass die den Auskoppelkörper eines Lichtleitkörpers zu der Aussparung hin begrenzende Oberfläche deckungsgleich zu der den Endbereich des benachbarten Lichtleitkörpers begrenzenden Oberfläche ausgebildet ist.

Der Endbereich eines Lichtleitkörpers ist der in Haupt-Lichteinkoppelrichtung gesehen dem Einkoppelbereich gegenüberliegende bzw. dem Einkoppelbereich abgewandte Bereich des Lichtleitkörpers.

Beispielsweise kann die zumindest eine Primärlichtquelle zusammen mit dem Lichtleitelement zur Erzeugung einer Haupt-Signallichtfunktion, z.B. einer Blinklicht-Funktion, vorgesehen sein.

Beispielsweise können die eine oder die mehreren Sekundärlichtquellen und die zugeordneten Lichtleitkörper zur Erzeugung einer Zusatz-Signallichtfunktion, z.B. einer Wischblinkerfunktion, vorgesehen sein.

Vorzugsweise ist die eine oder sind die mehreren Sekundärlichtquellen unabhängig voneinander und/oder unabhängig von der zumindest einen Primärlichtquelle ansteuerbar.

Es kann zumindest eine weitere Primärlichtquelle vorgesehen ist, deren Licht über einen weiteren Einkoppelbereich an einem dem ersten Einkoppelbereich gegenüberliegenden Ende des Lichtleitelementes in dieses eingekoppelt werden kann, wobei vorzugsweise alle Primärlichtquellen zu einer Haupt-Signallichtfunktion, z.B. einer Blinklicht-Funktion, beitragen.

Bei einer solchen Ausgestaltung kann sich der Vorteil ergeben, dass das Lichtleitelement gleichmäßiger ausgeleuchtet werden kann, wenn alle Primärlichtquellen gleichzeitig eingeschaltet sind.

Es kann vorgesehen sein, dass die zumindest eine Primär-Lichtquelle oder jede Primär-Lichtquelle und/oder zumindest eine, vorzugsweise jede Sekundär-Lichtquelle, eine LED-Lichtquelle ist bzw. LED-Lichtquellen sind, wobei eine LED-Lichtquelle eine oder mehrere Leuchtdioden umfasst.

Es kann vorgesehen sein, dass die zumindest eine Primär-Lichtquelle oder jede Primär-Lichtquelle und/oder zumindest eine, vorzugsweise jede Sekundär-Lichtquelle, eine Laser-Lichtquelle umfasst, wobei der lichtemittierende einer Laser-Lichtquelle von zumindest einem Licht-Emissionsbereich zumindest eines Konversionselementes der Laserlichtquelle gebildet ist.

Eine beliebige Mischung von unterschiedlichen Lichtquellen, wie LED-Lichtquellen und Laser-Lichtquellen, kann vorgesehen sein.

Es kann vorkommen, dass das von den Lichtleitkörper abgestrahlte Licht von dem Lichtleitelement derart beeinflusst, dass sich nachteilige Effekte auf die erzeugten Sekundär-Lichtverteilungen ergeben.

Entsprechend kann es von Vorteil sein, wenn eine eingangs beschriebene Lichtleiteranordnung zu schaffen, bei welcher die von dem hinter dem Lichtleitelement angeordneten Lichtkörper erzeugten Sekundär-Lichtverteilungen beim Durchtritt durch den Lichtleiter nicht verändert werden oder möglichst unverändert bleiben, oder lediglich derart beeinflusst werden, dass sich keine nachteiligen Auswirkungen auf die Sekundär-Lichtverteilungen ergeben.

Diese Aufgabe wird mit einer eingangs erwähnten Lichtleiteranordnung dadurch gelöst, dass erfindungsgemäß die Rückseite des Lichtleitelementes und die Lichtauskoppelfläche des zumindest einen Lichtleitkörpers zueinander beabstandet angeordnet sind und (i) die Rückseite des Lichtleitelementes und die Lichtauskoppelfläche des zumindest einen Lichtleitkörpers oder (ii) die Rückseite und die Lichtauskoppelfläche des Lichtleitelementes sowie die Lichtauskoppelfläche des zumindest einen Lichtleitkörpers derart aufeinander abgestimmt sind, dass Lichtstrahlen, die sich in dem Lichtleitkörper unter einem Winkel zu einer Horizontalebene ausbreiten, nach dem Austritt aus dem Lichtleitelement weiterhin unter diesem Winkel zu der Horizontalebene ausbreiten.

Das bedeutet, dass z.B. Lichtstrahlen, welche sich in dem Lichtleitkörper jeweils in einer Ebene, welche parallel zu der Horizontalebene verläuft, fortpflanzen (d.h., der Winkel = 0°), nach dem Austritt aus dem Lichtleitelement wieder jeweils in einer Ebene fortpflanzen, welche parallel zu der Horizontalebene liegt.

Richtungsangaben beziehen sich dabei jeweils auf den eingebauten Zustand der Lichtleiteranordnung in ein Kraftfahrzeug bzw. in einen Kraftfahrzeugscheinwerfer, welcher wiederum in ein Kraftfahrzeug eingebaut ist.

Beispielsweise ist vorgesehen, dass
- die Rückseite des Lichtleitelementes und die Lichtauskoppelfläche des zumindest einen Lichtleitkörpers zueinander beabstandet angeordnet sind,
- die Rückseite des Lichtleitelementes in Querschnitten normal auf die Längsmittelachse des Lichtleitelementes eine konvexe asphärische Kontur aufweist,
- und die Lichtauskoppelfläche des zumindest einen Lichtleitkörpers eine asphärische konkave Kontur aufweist,

- und wobei alle Punkte der Lichtauskoppelfläche des zumindest einen Lichtleitkörpers idente Abstände zu der Rückseite des Lichtleitelementes aufweisen, wobei ein Abstand jeweils der Länge der Normalengeraden, errichtet in einem Punkt auf Rückseite des Lichtleitelementes, gemessen von diesem Punkt bis zum Durchstoßpunkt der Normalengeraden auf der Lichtauskoppelfläche des Lichtleitkörpers, entspricht.

Es kann vorgesehen sein, dass
- die Rückseite des Lichtleitelementes und die Lichtauskoppelfläche des zumindest einen Lichtleitkörpers in einem Normalabstand d zueinander beabstandet angeordnet sind,
- die Rückseite des Lichtleitelementes in Querschnitten normal auf die Längsmittelachse des Lichtleitelementes eine konvexe kreisförmige Kontur mit einem Radius r aufweist, wobei der Mittelpunkt M der kreisförmigen Kontur auf der Längsmittelachse des Lichtleitelementes liegt,
- und wobei in entsprechenden Querschnitten die Lichtauskoppelfläche des zumindest einen Lichtleitkörpers eine zu der Kontur des Lichtleitelementes konzentrische, konkave, kreisförmige Kontur mit einem Radius R aufweist,
- und wobei für den Abstand d die Relation SW/2 < d < SW gilt, wobei SW die Schnittweite der von der Rückseite des Lichtleitelementes gebildeten optisch wirksamen Fläche ist.

Die sammelnde Linsenwirkung der konvexen Lichtleitelement-Außenflächen wird durch die konkave Lichtaustrittsfläche des bzw. der Lichtleitkörper aufgehoben bzw. verringert, sodass ein möglichst homogen wirkender Leuchteindruck an der Lichtaustrittsfläche entsteht.

Vorzugsweise sind dabei das Lichtleitelement und der zumindest eine Lichtleitkörper derart aufeinander abgestimmt, dass sich unmittelbar vor dem Austritt aus dem Lichtleitkörper in diesem parallel zueinander fortpflanzende Lichtstrahlen nach dem Austritt aus dem Lichtleitelement nach wie vor parallel zueinander fortpflanzen.

Betrachtet man ein Lichtbündel in dem Lichtleitkörper, welches Lichtbündel ausschließlich parallele Lichtstrahlen umfasst, so sind nach dem Austritt dieses Lichtbündels aus dem Lichtleitelement nach wie vor alle Lichtstrahlen dieses Lichtbündels parallel zueinander, d.h. ein Bündel paralleler Strahlen ist nach dem Lichtleitelement wieder ein Bündel paralleler Strahlen.

Wenn dabei in diesem oder einem anderen Zusammenfang von einer "Abstimmung des Lichtleitkörpers und dem zumindest einen Lichtleitkörper" die Rede ist, so betrifft dies eine Abstimmung der Rückseite des Lichtleitelementes und der Lichtauskoppelfläche des zumindest einen Lichtleitkörpers aufeinander oder eine Abstimmung der Rückseite und der Lichtauskoppelfläche des Lichtleitelementes sowie die Lichtauskoppelfläche des zumindest einen Lichtleitkörpers aufeinander.

Beispielsweise kann vorgesehen sein, dass ein Lichtleitkörper und das Lichtleitelement derart aufeinander abgestimmt sind, dass Lichtstrahlen beim Übertritt von einem Lichtleitkörper in das Lichtleitelement in horizontaler Richtung keine Ablenkung erfahren oder parallel verschoben werden.

Die "Abstimmung" betrifft hier die betroffenen Übergangsflächen.

Da der Normalabstand zwischen Lichtleitelement und Lichtleitkörper entlang der Einkoppelfläche ident ist, wirkt der Luftspalt als "planparallele Platte". Dies führt in horizontaler Richtung zu einem konstanten seitlichen Versatz der Teillichtverteilungen.

Es kann vorgesehen sein, dass Lichtstrahlen beim Austritt aus dem Lichtleitelement in Bezug auf ihre Ausbreitungsrichtung im Lichtleitkörper in horizontaler Richtung um einen Winkel ungleich 0° abgelenkt werden, wobei vorzugsweise in horizontaler Richtung gesehen das Lichtleitelement parallel zueinander durchquerende Lichtstrahlen um denselben Winkel abgelenkt werden.

Weiters ist beispielsweise vorgesehen, dass sich die Schnittweite SW ergibt aus SW = (2 - nl)/(2 n1 - 2) r, wobei n1 der Brechungsindex des Materials des Lichtleitkörpers ist.

Es kann vorgesehen sein, dass der zumindest eine Lichtleitkörper eine Höhe H aufweist, wobei H < 2 r oder H = 2 r gilt.

Von Vorteil kann es sein, wenn sich der zumindest eine Lichtleitkörper hinsichtlich seiner Höhenerstreckung symmetrisch zu einer, insbesondere horizontalen, Ebene durch die Längsmittelachse erstreckt.

Zweckmäßig kann es sein, wenn der zumindest eine Lichtleitkörper beiderseits einer, insbesondere horizontalen, Ebene durch die Längsmittelachse eine geringere Höhenausdehnung aufweist als das Lichtleitelement.

Bezüglich der Höhenerstreckung betrachtet man dabei jeweils Vertikalschnitte durch die Lichtleitkörper. Diese Vertikalschnitte sind Querschnitte normal auf die Längsmittelachse des Lichtleitelementes, wie oben bereits angesprochen. Die Ebene verläuft durch den Schnittpunkt der vertikalen Querschnittebene mit der Längsmittelachse.

Durch die oben beschriebene bevorzugte Ausgestaltung resultiert darin, dass der Lichtleitkörper zu beiden Seiten der Ebene eine Höhenerstreckung von H/2 aufweist und unterhalb oder maximal auf Höhe der Kontur des Lichtleiters (Lichtleitelementes) liegt.

Somit kann möglichst viel bzw. der gesamte aus dem Lichtleitkörper austretende Lichtstrom in das Lichtleitelement gelangen.

Der Öffnungswinkel des Abstrahlkegels des Lichtes aus dem zumindest einen Lichtleitkörper kann aus dem Verhältnis von H zu r eingestellt werden gemäß dem Zusammenhang tan(theta) = (n2 - 1)/n2 (H/r).

Damit wird erreicht, dass die Lichtleitkörper nicht über das Lichtleitelement hinausleuchten sondern der gesamte Lichtstrom auf das Lichtleitelement abgestrahlt wird. Abschattungselemente sind daher nicht notwendig.

n2 ist der Brechungsindex des Materials des zumindest einen Lichtleitelementes, generell gilt vorzugsweise n2 = n1. n1 ist der Brechungsindex des oder der Lichtleitkörper.

Bevorzugt ist schließlich noch vorgesehen, dass der oder die Lichtleitkörper-Einkoppelbereiche derart ausgebildet sind, dass von der zugehörigen Sekundärlichtquelle eingekoppeltes Licht im Wesentlichen in eine Haupt-Lichtausbreitungsrichtung parallel gerichtet wird.

Gemäß einem noch weiteren Aspekt der Erfindung kann es vorgesehen sein, Lichtleiteranordnung zu schaffen, bei welcher die von dem hinter dem Lichtleitelement angeordneten Lichtkörper erzeugten Sekundär-Lichtverteilungen möglichst gleichmäßig bzw. homogen beleuchtet sind. Vorzugsweise soll also die Lichtverteilung keine Maxima besitzen. Weiters soll vorzugsweise für einen Betrachter die leuchtende Fläche mit gleicher Leuchtdichte über den gesamten Bereich erscheinen.

Entsprechend kann vorgesehen sein, dass - gesehen in Haupt-Lichtausbreitungsrichtung des über die zumindest eine Sekundärlichtquelle eingekoppelten Lichtes in dem Lichtleitkörper - die Lichtleitkörper-Umlenkfläche des zumindest einen Lichtleitkörpers zu dem Lichtleitelement hin gekrümmt ausgebildet ist, und dass die sich in Horizontalschnitten durch die Lichtleitkörper-Umlenkfläche des zumindest einen Lichtleitkörpers ergebenden Schnittkurven, die Trägerkurven der zumindest einen Lichtleitkörper-Umlenkfläche, eine konstante Krümmung aufweisen.

Die Haupt-Lichtausbreitungsrichtung S im Lichtleitkörper entspricht dabei vorzugsweise der Haupt-Lichtabstrahlrichtung der Sekundärlichtquelle.

Die Trägerkurven folgen also einem Verlauf f(x) proportional zu x^2, wobei x entlang der Haupt-Lichtausbreitungsrichtung aufgetragen ist.

Durch diesen Verlauf wird über die ganze Länge der Einkoppeloptik eine konstante Lichtmenge Richtung Lichtleiter umgelenkt: die Homogenität in horizontaler Richtung wird verbessert. Durch die gerade vertikale Ausrichtung der Umlenkprismen kann die Homogenität auch in vertikaler Richtung erhöht werden.

Licht wird von einer Sekundärlichtquelle in der Hauptabstrahlrichtung der jeweiligen Sekundärlichtquelle in den Lichtleitkörper eingestrahlt bzw. eingekoppelt und pflanzt sich in diesem vorerst hauptsächlich in einer Haupt-Lichtausbreitungsrichtung aus, bevor es an einer Lichtleitkörper-Umlenkfläche umgelenkt wird.

Der Ausdruck, dass sich das Licht in Richtung der Haupt-Lichtausbreitungsrichtung fortpflanzt, bedeutet natürlich - wie dies dem Fachmann hinlänglich bekannt ist - nicht, dass alle Lichtstrahlen sich in diese Richtung ausbreiten, sondern bedeutet vielmehr, dass die dominierende Komponente aller Lichtstrahlen in dieser Richtung liegt bzw. verläuft.

Genauso bezeichnet der Ausdruck "Hauptabstrahlrichtung" der Sekundärlichtquelle nicht eine Richtung, in welche sich alle von der Lichtquelle emittierten Lichtstrahlen bewegen, sondern jene Richtung, in welcher die dominierende Komponente der emittierten Lichtstrahlen liegt.

Vorzugsweise entspricht die Haupt-Lichtausbreitungsrichtung S der Hauptabstrahlrichtung der Sekundärlichtquelle.

Beispielsweise ist vorgesehen, dass ein Teil der Trägerkurven oder alle Trägerkurven einen identischen Wert für die Krümmung aufweisen.

Es kann vorgesehen sein, dass ein Teil der Trägerkurven oder alle Trägerkurven einen unterschiedlichen Wert für die Krümmung aufweisen.

Weiters kann vorgesehen sein, dass das Lichtleitelement eine Längsmittelachse aufweist und dass die Haupt-Lichtausbreitungsrichtung zu der Längsmittelachse unter einem Verkipp-Winkel ungleich 0° verläuft.

Dadurch kann die Umlenkflächen vom Anfang bis zum Ende hin möglichst gleichmäßig bestrahlt werden, sodass die abgestrahlte Lichtmenge über die gesamte Länge möglichst ident ist.

Die Längsmittelachse ist bei einem geradlinig ausgebildeten Lichtleitelement (das Lichtleitelement bildet einen geraden Stab) eine Gerade. In diesem Fall ist der Verkipp-Winkel über den gesamten Lichtleitkörper konstant.

Typischer Weise ist allerdings das Lichtleitelement gekrümmt und somit ist auch die Längsmittelachse gekrümmt. In diesem Fall variiert der Verkipp-Winkel bei einem Fortschreiten in Haupt-Lichtausbreitungsrichtung. Der Verkipp-Winkel wird in diesem Fall in einem definierten Punkt der Längsmittelachse angegeben, wie im Folgenden beschrieben. Betrachtet man eine Trägerkurve, so wird durch den Anfangspunkt der Trägerkurve, das ist der Punkt der Trägerkurve, der am nächsten bei der Sekundärlichtquelle liegt, eine Normale auf die Haupt-Lichtausbreitungsrichtung errichtet.

Typischerweise, aber nicht notwendiger Weise, ist in diesem Anfangspunkt die Haupt-Lichtausbreitungsrichtung normal auf eine Normale an die Trägerkurve in diesem Punkt. In diesem Fall fallen die Normale auf Haupt-Lichtausbreitungsrichtung und die Normale an die Trägerkurve zusammen.

Die Normale wird mit der Längsmittelachse geschnitten, bei dem Schnittpunkt handelt es sich um den oben angesprochenen definierten Punkt. In diesem Schnittpunkt wird eine Normale an die Längsmittelachse gelegt. Der Winkel phi zwischen dieser Normalen und der Normalen entspricht dem Winkel Verkipp-Winkel.

Insbesondere kann vorgesehen sein, dass der Verkipp-Winkel derart gewählt ist, dass mit zunehmendem Abstand von der Sekundärlichtquelle die Trägerkurve und die Längsmittelachse aufeinander zulaufen.

Die Sekundärlichtquellen sind also vorzugsweise auf das Lichtleitelement hin gerichtet.

Im Folgenden ist die Erfindung an Hand der Zeichnung näher erörtert. In dieser zeigt
Fig. 1 eine beispielhafte erfindungsgemäße Lichtleiteranordnung in einer Ansicht von oben,
Fig. 2 die Lichtleiteranordnung aus Figur 1 in einer perspektivischen Ansicht von schräg hinten,
Fig. 3 einen Vertikal-Schnitt durch die Lichtleiteranordnung entlang der Ebene A-A in Figur 1,
Fig. 4 exemplarische Verläufe von Lichtstrahlen in einem Lichtleitkörper und dem Lichtleitelement in dem Schnitt aus Figur 3,
Fig. 5 exemplarische Verläufe von Lichtstrahlen in einem Horizontal-Schnitt durch die Lichtleiteranordnung im Bereich eines Lichtleitkörpers,
Fig. 6 die Lichtleiteranordnung aus Figur 1 in einer Detailansicht im Bereich von zwei Lichtleitkörpern,
Fig. 7 eine Detailansicht der Lichtleiteranordnung im Bereich eines Lichtleitkörper-Einkoppelbereiches in einem Horizontalschnitt,
Fig. 8 einen Lichtleitkörper in einem Horizontalschnitt,
Fig. 9 noch einmal den Horizontalschnitt aus Figur 8,
Fig. 10 eine Detailansicht der Lichtleiteranordnung in einem Horizontalschnitt mit dem Fokus auf die Lichtleitkörper-Umlenkfläche eines Lichtleitkörpers und den dieser Lichtleitkörper-Umlenkfläche zugeordneten Lichtumlenkfläche des Lichtleiters, und
Fig. 11 einen Lichtleitkörper mit zugeordneter Sekundärlichtquelle im Bereich seines Lichtleitkörper-Einkoppelbereiches in einem Horizontalschnitt,
Fig. 11a die Lichteinkoppel-Stelle des Lichtleitkörper-Einkoppelbereiches in einer Ansicht von hinten, und
Fig. 12 eine beispielhafte zeitliche Abfolge der Aktivierung der einzelnen mit der Lichtleiteranordnung erzeugten Lichtverteilungen.

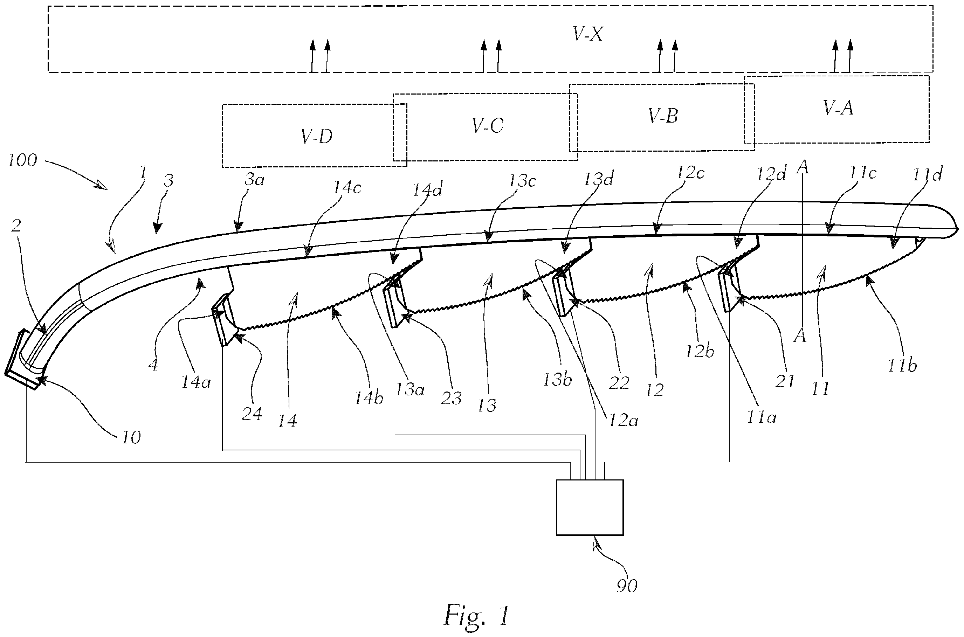

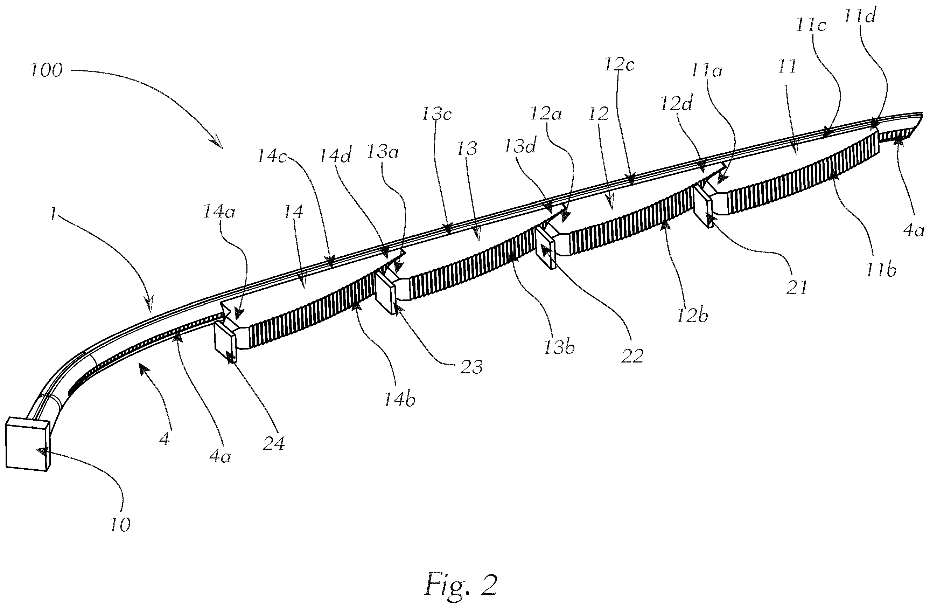

Die Figuren 1 und 2 zeigen unterschiedliche Ansichten einer beispielhaften, erfindungsgemäßen Lichtleiteranordnung 100 zur Erzeugung von zumindest einer Beleuchtungsfunktion und/oder Signalisierungsfunktion eines Kraftfahrzeugscheinwerfers oder von zumindest einer Beleuchtungsfunktion und/oder Signalisierungsfunktion einer Beleuchtungsvorrichtung für einen Kraftfahrzeugscheinwerfer.

Die gezeigte Lichtleiteranordnung ist dabei für einen linken Fahrzeugscheinwerfer vorgesehen,

In dem konkreten Beispiel ist die Lichtleiteranordnung zur Erzeugung einer Signalisierungsfunktion, konkret eines Blinklichtes (Lichtfunktion "Fahrtrichtungsanzeiger") eingerichtet, wobei sich die Lichtleiteranordnung insbesondere zur Realisierung einer Wischblinker-Funktion eignet.

Die gezeigte Lichtleiteranordnung 100 umfasst ein langgestrecktes Lichtleitelement 1 und eine Primärlichtquelle 10, wobei Licht der Primärlichtquelle 10 über einen Einkoppelbereich 2 an einem Ende des Lichtleitelementes 1 in das Lichtleitelement 1 eingekoppelt werden kann.

Das Lichtleitelement 1 kann dabei geradlinig ausgebildet sein oder leicht gekrümmt, wie in dem gezeigten Beispiel, aber auch andere Formen, insbesondere stärker gekrümmte Ausgestaltungen sind möglich.

Unter "langgestreckt" ist dabei zu verstehen, dass die Längserstreckung des Lichtleitelementes 1 (also die Erstreckung in Lichtausbreitungsrichtung) größer, insbesondere deutlich größer ist, z.B. mindestens 10-mal größer, als die Quererstreckung (also z.B. der oder ein Durchmesser des Lichtleitelementes).

Das Lichtleitelement 1 besteht aus einem optisch transparenten Material, in welchem über den Einkoppelbereich 2 eingekoppeltes Licht, insbesondere an dem Außenmantel des Lichtleitelementes 1, total reflektiert wird und sich so entlang der Längserstreckung des Lichtleitelementes 1 fortpflanzt.

Das Lichtleitelement 1, d.h. beispielsweise der Außenmantel des Lichtleitelementes, weist an seiner Vorderseite 3 eine Lichtauskoppelfläche 3a und an seiner der Vorderseite 3 gegenüberliegenden Rückseite 4 eine Lichtumlenkfläche 4a aufweist, sodass von der zumindest einen Primärlichtquelle 10 in das Lichtleitelement 1 eingekoppeltes und sich in diesem fortpflanzendes Licht an der Lichtumlenkfläche 4a umgelenkt und über die Lichtauskoppelfläche 3a aus dem Lichtleitelement 1 abgestrahlt wird.

Beispielsweise umfasst die Umlenkfläche 4a - allgemein, d.h. nicht auf die gezeigte Ausführungsform eingeschränkt - in bekannter Art und Weise eine Vielzahl an prismatischen, vorzugsweise nebeneinander angeordneten Elementen, welche auf der Umlenkfläche 4a auftreffendes Licht zu der Vorderseite 3 umlenken, wo es über die Lichtauskoppelfläche (Lichtaustrittsfläche) 3a austreten kann.

Mit dem Lichtleitelement 1 kann bei eingeschalteter Primärlichtquelle 2 somit eine schematisch angedeutete Primär-Lichtverteilung V-X erzeugt werden. Beispielsweise wird damit eine erste Lichtfunktion - z.B. die Lichtfunktion Fahrtrichtungsanzeiger laut ECE-R6 - realisiert, und die Primär-Lichtverteilung V-X entspricht der in der ECE-R6 vorgegebenen Lichtverteilung für die Lichtfunktion Fahrtrichtungsanzeiger.

Entlang der Rückseite 4 des Lichtleitelementes 1 sind in dem gezeigten Beispiel vier Lichtleitkörper 11, 12, 13, 14 angeordnet. Die Erfindung ist nicht auf eine bestimmte Anzahl an Lichtleitkörpern beschränkt, sinnvoll ist die Verwendung von zumindest zwei Lichtleitkörper, eine größere Anzahl von Lichtleitkörpern ist in der Regel vorteilhaft. Auch lediglich ein einziger Lichtleitkörper kann gewünschte Effekte, wie im Folgenden noch beschrieben, erzielen, zu bevorzugen sind aber zwei oder mehr Lichtleitkörper.

Jedem der vier Lichtleitkörper 11, 12, 13, 14 ist eine Sekundärlichtquelle 21, 22, 23, 24 zugeordnet, mit welcher Sekundärlichtquelle 21, 22, 23, 24 Licht in den zugeordneten Lichtleitkörper 11, 12, 13, 14 jeweils über einen Lichtleitkörper-Einkoppelbereich 11a, 12a, 13a, 14a eingekoppelt werden kann.

Die Lichtleitkörper 11, 12, 13, 14 bestehen wiederum aus einem optisch transparenten Material, in welchem über den Einkoppelbereich 11a, 12a, 13a, 14a eingekoppeltes Licht, insbesondere an den Außenflächen des Lichtleitkörpers, total reflektiert wird und sich so in dem Lichtleitkörper 11, 12, 13, 14 fortpflanzt.

Das eingekoppelte Licht wird an einer Lichtleitkörper-Umlenkfläche 11b, 12b, 13b, 14b zu einer Lichtleitkörper-Auskoppelfläche 11c, 12c, 13c, 14c umgelenkt und tritt über diese aus dem Lichtleitkörper 11, 12, 13, 14 aus, sodass mit jedem Lichtleitkörper 11, 12, 13, 14 durch Einschalten der jeweiligen Sekundärlichtquelle eine Sekundär-Lichtverteilung V-A, V-B, V-C, V-D erzeugt werden kann.

Der oder die Lichtleitkörper-Umlenkflächen 11b, 12b, 13b, 14b umfassen beispielsweise - allgemein, d.h. nicht auf die gezeigte Ausführungsform eingeschränkt - in bekannter Art und Weise eine Vielzahl an prismatischen, vorzugsweise nebeneinander angeordneten Elementen, welche auf der der Lichtleitkörper-Umlenkfläche 11b, 12b, 13b, 14b auftreffendes Licht zu der jeweiligen Lichtleitkörper-Auskoppelfläche 11c, 12c, 13c, 14c umlenken, wo es aus dem Lichtleitkörper 11, 12, 13, 14 austritt.

Die Lichtleitkörper-Auskoppelflächen 11c, 12c, 13c, 14c der Lichtleitkörper 11, 12, 13, 14 liegen der Rückseite 4 des Lichtleitelementes 1 gegenüber, sodass aus einem Lichtleitkörper 11, 12, 13, 14 austretendes Licht über die Rückseite 4 des Lichtleitelementes 1 in dieses eintritt, das Lichtleitelement 1 durchquert und über die Vorderseite 3 des Lichtleitelementes 1 austritt.

Vorzugsweise befindet sich zwischen dem Lichtleitelement 1 und einem Lichtleitkörper 11, 12, 13, 14 jeweils ein Luftspalt.

Schließlich zeigt Figur 1 schematisch noch ein Steuergerät 90, mit welchem die Lichtquellen 10, 21, 22, 23, 24 angesteuert werden können, wie dies später noch beschrieben wird.

In der Beschreibungseinleitung sind verschiedene Ausführungsformen beschrieben, wie das Lichtleitelement und ein oder mehrere Lichtleitkörper aufeinander abgestimmt sind können. Diese Ausgestaltungen können auch bei der in Figur 1 und 2 gezeigten Ausgestaltung vorgesehen sein.

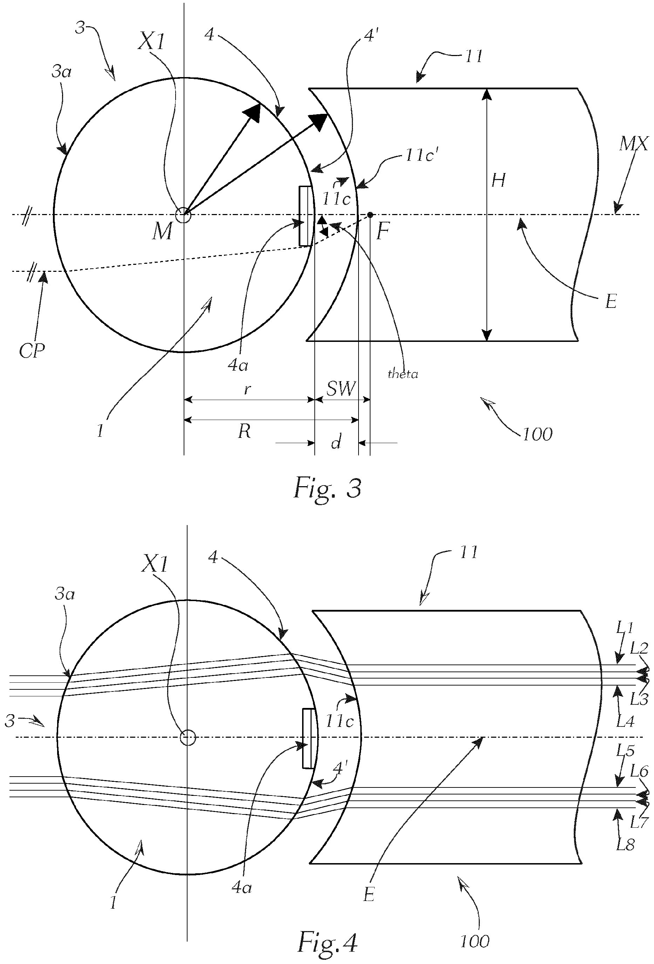

Im Folgenden wird an Hand der Figuren 3 und 4 eine spezifische konkrete Ausgestaltung beschrieben.

Figur 3 und 4 zeigen einen Vertikalschnitt durch die Lichtleiteranordnung im Bereich des Lichtleitkörpers 11. Die Rückseite 4 des Lichtleitelementes 1 und die Lichtauskoppelfläche 11c des Lichtleitkörpers 11 sind in einem Normalabstand d zueinander beabstandet angeordnet.

Die Rückseite 4 des Lichtleitelementes 1 weist in Querschnitten normal auf die Längsmittelachse X1 des Lichtleitelementes 1 - die Figuren 3 und 4 zeigen einen solchen Querschnitt - eine konvexe kreisförmige Kontur 4' mit einem Radius r auf, wobei der Mittelpunkt M der kreisförmigen Kontur 4' auf der Längsmittelachse X1 des Lichtleitelementes 1 liegt.

In entsprechenden, d.h. in denselben, Querschnitten weist die Lichtauskoppelfläche 11c des Lichtleitkörpers 11 eine zu der Kontur 4' des Lichtleitelementes 1 konzentrische, konkave, kreisförmige Kontur 11c' mit einem Radius R auf. Der Radius R ist wieder gemessen ausgehend vom Mittelpunkt M, der Krümmungsradius r der Kontur 4' und der Krümmungsradius der kreisförmigen Kontur 11c' der Lichtleitkörper-Lichtauskoppelfläche 11c haben somit denselben Mittelpunkt M.

Für den Abstand d gilt die Relation SW/2 < d < SW, wobei SW die Schnittweite der von der Rückseite 4 des Lichtleitelementes 1 gebildeten optisch wirksamen Fläche bzw. der Kontur 4' ist.

Die Schnittweite SW ist dabei der Abstand des Durchstoßungspunktes einer Achse MX durch die Kontur 4c' zu einem Punkt F auf der Achse MX. Die Achse MX steht dabei in dem betrachteten Querschnitt (lokal betrachtet) normal auf die Achse X1, verläuft also durch den Mittelpunkt M und steht normal auf eine vertikale Tangentialebene an die Achse X1 in dem Punkt M. Der Punkt F ist der Schnittpunkt eines paraxialen Strahles LP, welcher an der Lichtauskoppelfläche 3a der Vorderseite 3 und der Lichteinkoppelfläche 4a der Rückseite 4 des Lichtleitelementes 1 gebrochen wird.

Betrachtet man Figur 4, so erkennt man, dass sich durch eine solche Ausgestaltung ergibt, dass Lichtstrahlen L1 - L8, die sich in dem Lichtleitkörper 11 unter einem Winkel zu einer Horizontalebene E ausbreiten, nach dem Austritt aus dem Lichtleitelement 1 weiterhin unter diesem Winkel zu der Horizontalebene E ausbreiten.

An dieser Stelle sei angemerkt, dass - und diese Aussage gilt für das gesamte vorliegende Dokument und nicht nur für die vorliegend beschriebene Ausführungsform - die Ebene E eine Horizontalebene ist, wenn der Lichtleiter bzw. die Lichtleiteranordnung horizontal eingebaut ist. Die Lichtleiteranordnung kann aber auch zu einer Horizontalen geneigt, nach oben oder unten geneigt, eingebaut werden. In diesem Fall ist die Ebene E keine Horizontalebene. Für den Zweck einer einfachen Beschreibung wird aber von einer "Horizontalebene E" gesprochen, auch wenn diese im allgemeinen Fall keine Horizontalebene sein muss, wie soeben beschrieben.

Das bedeutet, dass die gezeigten Lichtstrahlen L1 - L8, welche sich in dem Lichtleitkörper 11 beispielhaft jeweils in einer Ebene, welche parallel zu der Horizontalebene E verläuft, fortpflanzen (d.h., der Winkel = 0°), nach dem Austritt aus dem Lichtleitelement 1 wieder jeweils in einer Ebene fortpflanzen, welche parallel zu der Horizontalebene E liegt.

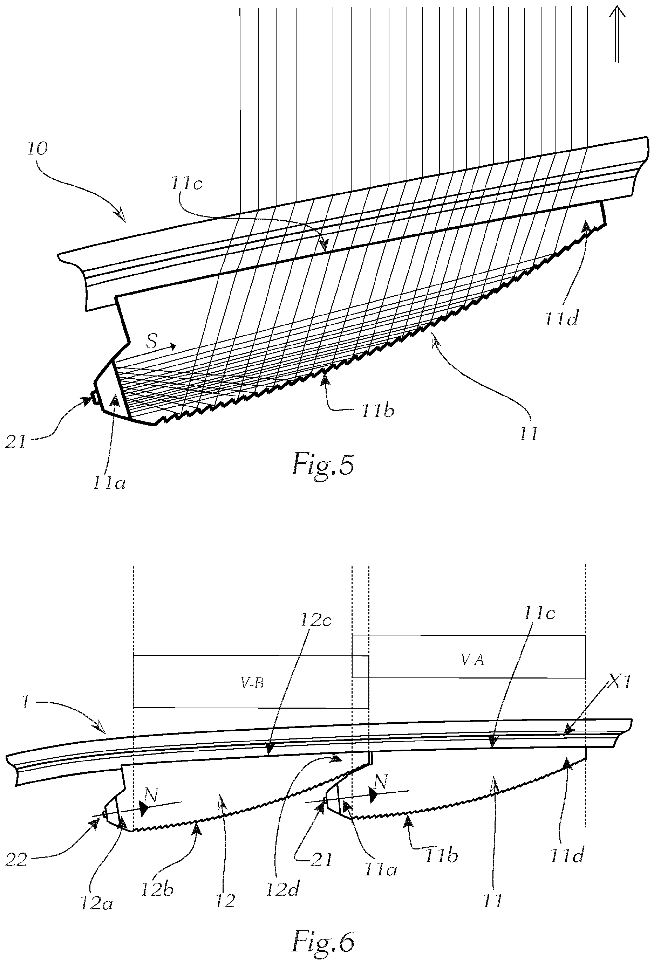

Figur 5 zeigt noch einmal die Lichtleiteranordnung im Bereich des Lichtleitkörpers 11 in einem Horizontalschnitt, wobei die Lichtleiteranordnung bevorzugt wie dargestellt ausgebildet ist, sodass sich das im Folgenden beschriebene Verhalten ergibt: gezeigt sind mehrere Lichtstrahlen, die von der Sekundärlichtquelle 21 in den Lichtleitkörper 11 eingekoppelt werden (Einkoppelbereich 11a), an der Lichtleitkörper-Umlenkfläche 11b umgelenkt werden, sich in dem Lichtleitkörper 1 in horizontaler Richtung (also in dem Horizontalschnitt) parallel zueinander zu der Lichtauskoppelfläche 11c bewegen, über diese aus dem Lichtleitkörper 1 auskoppeln, in das Lichtleitelement 1 eintreten und über die Lichtauskoppelfläche 3a des Lichtleitelementes 1 auskoppeln und eine Sekundär-Lichtverteilung V-A bilden.

Wie zu erkennen ist bewegen, sich in dieser bevorzugten Ausgestaltung die in dem Lichtleitkörper 1 horizontal parallel verlaufenden Lichtstrahlen auch nach dem Austritt aus dem Lichtleitelement nach wie vor horizontal parallel zueinander.

Generell ist bevorzugt vorgesehen, dass das Lichtleitelement und der zumindest eine Lichtleitkörper derart aufeinander abgestimmt, dass sich unmittelbar vor dem Austritt aus dem Lichtleitkörper 11 in diesem parallel zueinander fortpflanzende Lichtstrahlen nach dem Austritt aus dem Lichtleitelement 1 nach wie vor parallel zueinander fortpflanzen.

Betrachtet man ein Lichtbündel in dem Lichtleitkörper, welches Lichtbündel ausschließlich parallele Lichtstrahlen umfasst, so sind bei dieser bevorzugten Ausgestaltung nach dem Austritt dieses Lichtbündels aus dem Lichtleitelement nach wie vor alle Lichtstrahlen dieses Lichtbündels parallel zueinander, d.h. ein Bündel paralleler Strahlen ist nach dem Lichtleitelement wieder ein Bündel paralleler Strahlen.

Wenn dabei in diesem oder einem anderen Zusammenfang von einer "Abstimmung des Lichtleitkörpers und dem zumindest einen Lichtleitkörper" die Rede ist, so betrifft dies eine Abstimmung der Rückseite 4 des Lichtleitelementes 1 und der Lichtauskoppelfläche 11c des zumindest einen Lichtleitkörpers 11 aufeinander oder eine Abstimmung der Rückseite 4 und der Lichtauskoppelfläche 3a des Lichtleitelementes 1 sowie die Lichtauskoppelfläche 11c des zumindest einen Lichtleitkörpers 11 aufeinander.

Beispielsweise kann vorgesehen sein, dass ein Lichtleitkörper und das Lichtleitelement derart aufeinander abgestimmt sind, dass Lichtstrahlen beim Übertritt von einem Lichtleitkörper in das Lichtleitelement in horizontaler Richtung keine Ablenkung erfahren oder parallel verschoben werden.

Die "Abstimmung" betrifft hier die betroffenen Übergangsflächen.

Weiters werden die von einem Lichtleitkörper 11 stammenden Lichtstrahlen vorzugsweise beim Austritt aus dem Lichtleitelement derart gebrochen, dass diese in Bezug auf ihre Ausbreitungsrichtung im Lichtleitkörper 11 in horizontaler Richtung um einen Winkel ungleich 0° abgelenkt werden, wobei vorzugsweise in horizontaler Richtung gesehen das Lichtleitelement parallel zueinander durchquerende Lichtstrahlen um denselben Winkel abgelenkt werden. Diese Situation ist beispielhafte in Figur 5 gezeigt.

Bei der gezeigten Ausführungsform erstreckt sich dabei der Lichtleitkörper 11 hinsichtlich seiner Höhenerstreckung symmetrisch zu einer, insbesondere horizontalen, Ebene E durch die Längsmittelachse X1 erstreckt.

Insbesondere von Vorteil ist es, wenn wie gezeigt der Lichtleitkörper 11 beiderseits der beispielsweise (siehe die Erörterungen dazu weiter oben) horizontalen Ebene E durch die Längsmittelachse X1 eine geringere Höhenausdehnung aufweist als das Lichtleitelement 1.

Bezüglich der Höhenerstreckung betrachtet man dabei jeweils Vertikalschnitte durch die Lichtleitkörper. Diese Vertikalschnitte sind Querschnitte normal auf die Längsmittelachse X1 des Lichtleitelementes, wie oben bereits angesprochen. Die Ebene E verläuft durch den Schnittpunkt der vertikalen Querschnittebene mit der Längsmittelachse X1.

Durch die oben beschriebene bevorzugte Ausgestaltung resultiert darin, dass der Lichtleitkörper 11 zu beiden Seiten der Ebene E eine Höhenerstreckung von H/2 aufweist und unterhalb oder maximal auf Höhe der Kontur des Lichtleiters 1 liegt.

Somit kann möglichst viel bzw. der gesamte aus dem Lichtleitkörper 11 austretende Lichtstrom in das Lichtleitelement 1 gelangen.

Der Öffnungswinkel des Abstrahlkegels theta (siehe Figur 3) des Lichtes aus dem zumindest einen Lichtleitkörper kann aus dem Verhältnis von H zu r eingestellt werden gemäß dem Zusammenhang tan(theta) = (n2 - 1)/n2 (H/r).

Damit wird erreicht, dass die Lichtleitkörper nicht über das Lichtleitelement hinausleuchten sondern der gesamte Lichtstrom auf das Lichtleitelement abgestrahlt wird. Abschattungselemente sind daher nicht notwendig.

n2 ist der Brechungsindex des Materials des zumindest einen Lichtleitelementes, generell gilt vorzugsweise n2 = n1. n1 ist der Brechungsindex des oder der Lichtleitkörper.

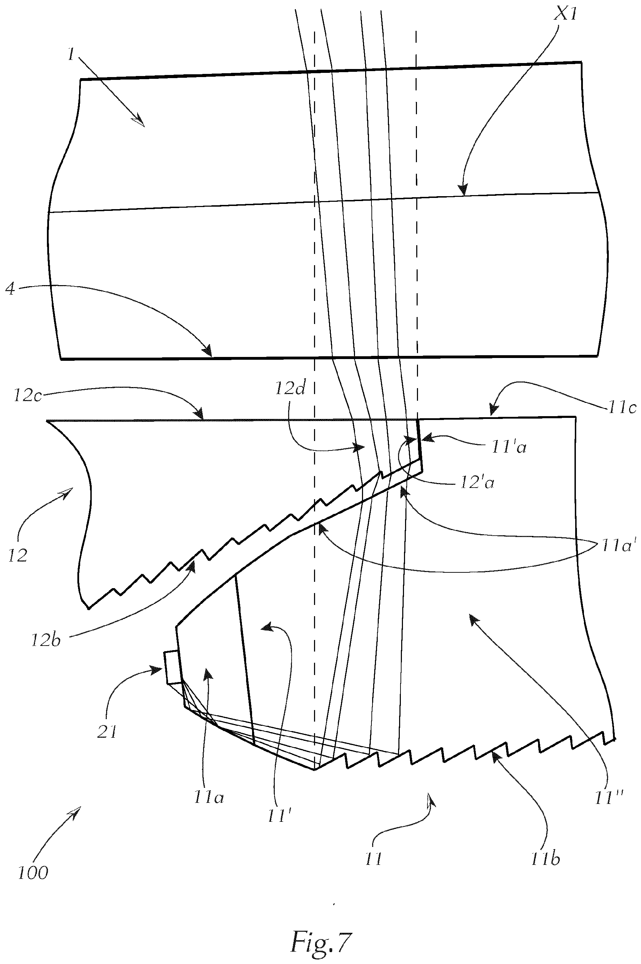

Die Figuren 6 und 7 zeigen noch einen weiteren Aspekt der erfindungsgemäßen Lichtleiteranordnung.

Figur 6 zeigt die Lichtleiteranordnung im Bereich von zwei benachbarten Lichtleitkörpern 11, 12.

Wie zu erkennen ist, sind die Sekundärlichtquellen 21, 22 zu der Längsmittelsachse X1 etwas verkippt bzw. verdreht, und zwar derart, dass die Hauptabstrahlrichtung N jeder Sekundärlichtquelle 21, 22 in einem Nachbarbereich des Lichtleitelementes 1 zu der jeweiligen Sekundärlichtquelle 21, 22 jeweils in etwa der Richtung einer Längsmittelachse X1 des Lichtleitelementes 1 entsprechen.

Prinzipiell kann die Hauptabstrahlrichtung N der Sekundärlichtquellen 21, 22 im jeweiligen Nachbarbereich parallel zu der Längsmittelachse X1 des Lichtleitelementes 1 verlaufen, bei der gezeigten Ausgestaltung ist die Hauptabstrahlrichtung N im Nachbarbereich zu der Längsmittelachse X1 unter einem Verkipp-Winkel phi ungleich 0° verläuft.

Beispielsweise ist der Verkippwinkel phi größer 0° und kleiner 10° ist bzw. größer 0° und kleiner 5°. Vorzugsweise beträgt der Verkippwinkel ca. 4°. Alle Sekundärlichtquellen sind typischerweise um denselben Verkippwinkel zu dem Nachbarbereich des Lichtleitelementes 1 verkippt, es können die Verkippwinkel aber auch unterschiedlich sein.

Wie Figur 6 in einer Übersichtsdarstellung und Figur 7 im Detail zu entnehmen ist, sind Lichtleitkörper 11, 12 derart ausgebildet und angeordnet, dass benachbarte Lichtleitkörper 11, 12 zumindest im Bereich der Lichtleitkörper-Auskoppelflächen 11c, 12c unmittelbar aneinander angrenzen oder in einem geringen Abstand zueinander angeordnet sind. Dies ist auch in den Figuren 1 und 2 gut für alle Lichtleitkörper 11 - 14 zu erkennen.

Wie Figur 7 zeigt, tritt Licht, welches im Lichtleitkörper-Einkoppelbereich 11a des Lichtleitkörpers 11 von der Lichtleitkörper-Umlenkfläche 11b umgelenkt wird, zumindest teilweise über eine den Lichtleitkörper-Einkoppelbereich 11a begrenzende Lichtleitkörper-Einkoppelbereichsfläche 11a' aus, tritt in den benachbarten Lichtleitkörper 12 ein, durchquert diesen und wird durch das Lichtleitelement 1 durch abgestrahlt.

Durch die erfindungsgemäße Anordnung der Sekundärlichtquellen 21 - 24 können diese problemlos auf einem gemeinsamen Kühlkörper bzw. auf einem gemeinsamen Träger, welcher vorzugsweise auf einem Kühlkörper angeordnet werden kann, angebracht werden. Um diese vorteilhafte Anordnung der Sekundärlichtquellen beibehalten zu können, sind die Lichtleitkörper zusätzlich auf die erfindungsgemäße Art und Weise angeordnet und ausgebildet, um die oben genannten Ziele der Erfindung erreichen zu können.

Vorzugsweise entspricht die Haupt-Lichtabstrahlrichtung N einer Sekundärlichtquelle der Haupt-Lichtausbreitungsrichtung S im Lichtleitkörper.

Der benachbarte Bereich (Nachbarbereich) des Lichtleitelementes zu einer Sekundärlichtquelle ergibt sich durch Errichten einer Normalebene auf die Hauptabstrahlrichtung dieser Sekundärlichtquelle, vorzugsweise im Bereich der Sekundärlichtquelle, z.B. derart, dass die Normalebene durch diese Sekundärlichtquelle verläuft oder die Normalebene mit einer Lichtemissionsfläche der Sekundärlichtquelle zusammenfällt oder diese berührt oder schneidet. Schneiden dieser Normalebene mit dem Lichtleitelement ergibt einen Bereich in dem Lichtleitelement, welcher Bereich in dem benachbarten Bereich liegt.

Beispielsweise ist vorgesehen, dass zumindest bei jenen Lichtleitkörpern 12, 13, 14, welche im Bereich ihrer Lichtleitkörper-Einkoppelbereiche 12a, 13a, 14a an einen Endbereich 11d, 12d, 13d eines benachbarten Lichtleitkörpers 11, 12, 13 angrenzen, der Lichtleitkörper-Einkoppelbereich 12a, 13a, 14a quer zu einer Haupt-Lichtausbreitungsrichtung S bzw. zu der Haupt-Abstrahlrichtung N von der Lichtleiterkörper-Auskoppelfläche 12c, 13c, 14c beabstandet ist und sich entgegen der Haupt-Lichtausbreitungsrichtung S weg erstreckt, sodass zwischen dem Lichtleiterkörper-Einkoppelbereich 12a, 13a, 14a eines Lichtleitkörpers 12, 13, 14 und dem Lichtleitelement 1 eine Aussparung gebildet ist, in welcher Aussparung der Endbereich 11d, 12d, 13d des zu dem Lichtleitkörper 12, 13, 14 unmittelbar benachbarten Lichtleitkörpers 11, 12, 13 angeordnet ist. Dies ist in Figur 7 im Detail und in den Figuren 6 und 1, 2 in Übersicht gezeigt.

Dabei können die Lichtleitkörper 11, 12, 13, 14 jeweils aus einem Auskoppelkörper 11' und einem mit diesem, vorzugsweise einstückig, verbundenen Einkoppelkörper 11", in welchem der Einkoppelbereich 11a ausgebildet ist, bestehen, wobei der Einkoppelkörper 11" von dem Endbereich 11d des Lichtleitkörpers 11, welcher Endbereich 11d vorzugsweise Teil des Auskoppelkörpers 11' ist, weggerichtet ist und sich der Einkoppelkörper 11", insbesondere eine den Einkoppelkörper 11" begrenzende Einkoppelkörper-Fläche 11a', in einem Abstand zu einer von dem Endbereich 11d weg gerichteten, gedachten Verlängerung der Auskoppelfläche 11c befindet.

Die Einkoppelkörper-Fläche und die Lichtleitkörper-Einkoppelbereichsfläche 11a' sind dabei identisch bzw. beinhaltet erstere Fläche die letztere Fläche.

Der Einkoppelkörper und der Auskoppelkörper sind vorzugsweise, insbesondere bei einstückiger Ausgestaltung, aus demselben Material gebildet. Der Auskoppelkörper weist an einer Seite die Lichtleitkörper-Auskoppelfläche und gegenüberliegend die Lichtleitkörper-Umlenkfläche auf.

Dadurch ergibt sich zwischen dem Lichtleitelement, dem Einkoppelkörper eines Lichtleitkörpers und dem Auskoppelkörper eine Aussparung bzw. ein Freiraum, in welchem der benachbarte Lichtleitkörper mit seinem Endbereich angeordnet wird.

Es kann außerdem wie gezeigt vorgesehen sein, dass die den Auskoppelkörper 11' eines Lichtleitkörpers 11 zu der Aussparung hin begrenzende Oberfläche 11'a deckungsgleich, insbesondere parallel, zu der den Endbereich 12d des benachbarten Lichtleitkörpers 12 begrenzenden Oberfläche 12'a ausgebildet ist.

Die Lichtleitkörper liegen in den Bereichen 11'a, 12'a vorzugsweise unmittelbar aneinander an, oder die Lichtleitkörper sind - generell, nicht auf die vorliegende Ausführungsform beschränkt - einstückig ausgebildet. Die Lichtleitkörper können auch einen Abstand zueinander haben, dieser beträgt vorzugweise maximal 0,2 mm.

Der Endbereich eines Lichtleitkörpers ist der in Haupt-Lichtausbreitungsrichtung S gesehen dem Einkoppelbereich gegenüberliegende bzw. dem Einkoppelbereich abgewandte Bereich des Lichtleitkörpers.

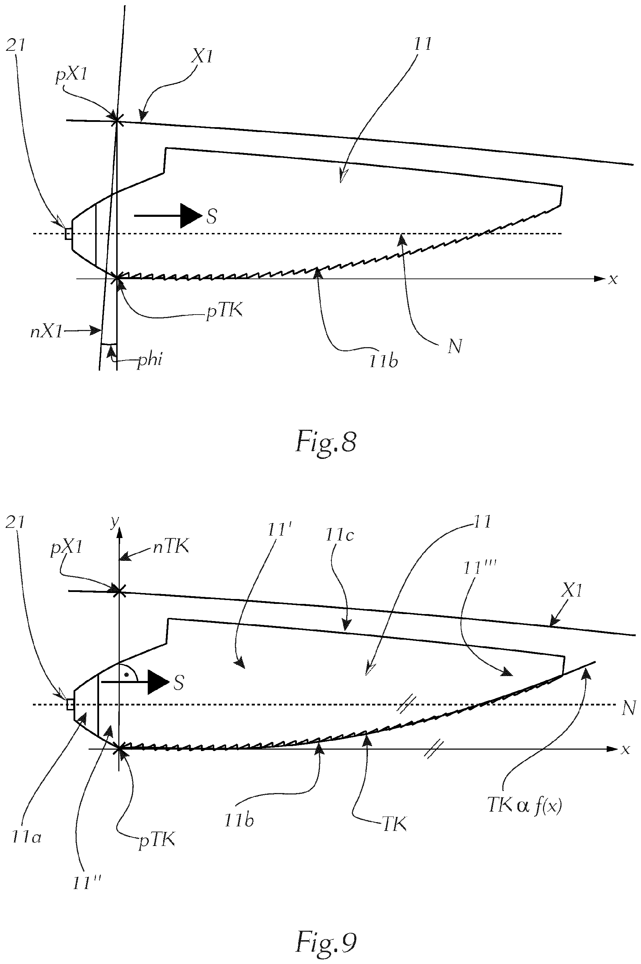

Die Figuren 8 und 9 zeigen einen weiteren Aspekt der erfindungsgemäßen Lichtleiteranordnung, der für sich allein genommen bereits eine Erfindung darstellt. Figur 8 und 9 zeigen den Lichtleitkörper 11 in einem Horizontalschnitt.

Wie zu erkennen ist, ist die Lichtleitkörper-Umlenkfläche 11b des Lichtleitkörpers 11 in Haupt-Lichtausbreitungsrichtung S gesehen zu dem Lichtleitelement 1 hin gekrümmt ausgebildet.

In dem gezeigten Horizontalschnitt durch die Lichtleitkörper-Umlenkfläche 11b des Lichtleitkörpers 11 ergibt sich eine Schnittkurve, die Trägerkurven TK, der einen Lichtleitkörper-Umlenkfläche 11b, welche eine konstante Krümmung aufweist.

Vorzugsweise ergeben sich auch in den anderen, nicht gezeigten Horizontalschnitten solche Trägerkurven mit konstanter Krümmung.

Die Trägerkurve bzw. die Trägerkurven folgen also einem Verlauf f(x) proportional zu x^2, wobei x entlang der Haupt-Lichtausbreitungsrichtung S aufgetragen ist (siehe Figur 9).

Es kann vorgesehen sein, dass ein Teil der Trägerkurven TK oder alle Trägerkurven TK einen identischen Wert für die Krümmung aufweisen.

Es kann auch vorgesehen sein, dass ein Teil der Trägerkurven TK oder alle Trägerkurven TK einen unterschiedlichen Wert für die Krümmung aufweisen.

Wie nun Figur 5 zeigt, wird Licht von der Sekundärlichtquelle 21 in der Hauptabstrahlrichtung der jeweiligen Sekundärlichtquelle in den Lichtleitkörper 11 eingestrahlt bzw. eingekoppelt und pflanzt sich in diesem vorerst hauptsächlich in der Haupt-Lichtausbreitungsrichtung S aus, bevor es an der Lichtleitkörper-Umlenkfläche 11b umgelenkt wird.

Der Ausdruck, dass sich das Licht in Richtung der Haupt-Lichtausbreitungsrichtung S fortpflanzt, bedeutet natürlich - wie dies dem Fachmann hinlänglich bekannt ist - nicht, dass alle Lichtstrahlen sich in diese Richtung ausbreiten, sondern bedeutet vielmehr, dass die dominierende Komponente aller Lichtstrahlen in dieser Richtung S liegt bzw. verläuft.

Genauso bezeichnet der Ausdruck "Hauptabstrahlrichtung" der Sekundärlichtquelle nicht eine Richtung, in welche sich alle von der Lichtquelle emittierten Lichtstrahlen bewegen, sondern jene Richtung, in welcher die dominierende Komponente der emittierten Lichtstrahlen liegt.

Vorzugsweise entspricht die Haupt-Lichtausbreitungsrichtung S der Hauptabstrahlrichtung der Sekundärlichtquelle.

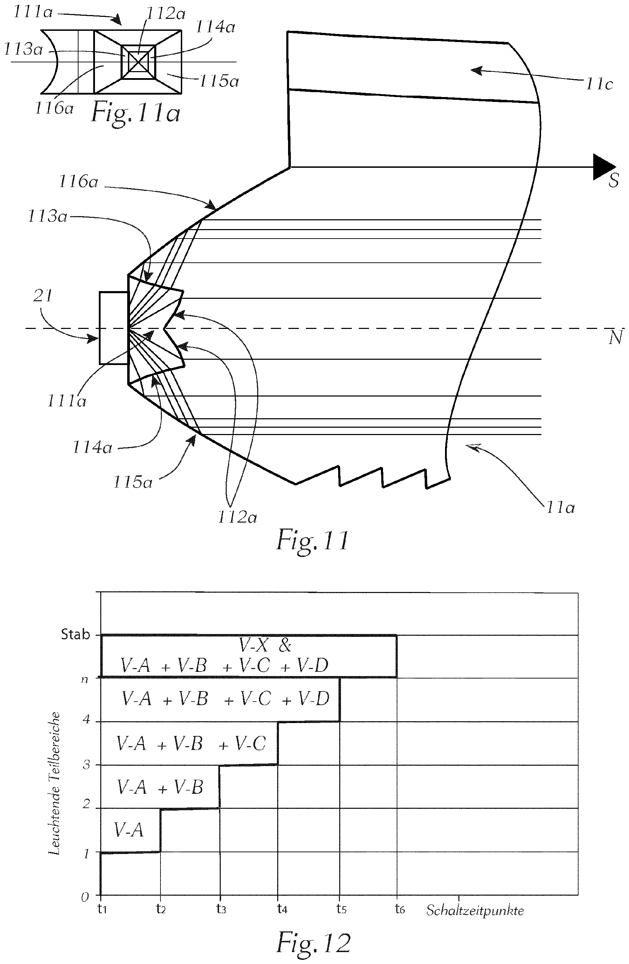

In diesem Zusammenhang wird auf Figur 11 und Figur 11a vorgegriffen. Figur 11 zeigt den Lichtleitkörper 11 mit zugeordneter Sekundärlichtquelle 21 im Bereich des Lichtleitkörper-Einkoppelbereiches 11a in einem Horizontalschnitt. Die verwendeten Lichtquellen, insbesondere Sekundärlichtquellen, bei denen es sich vorzugsweise um LED-Lichtquellen handelt, haben einen großen Abstrahlkegel, beispielsweise mit einem Öffnungswinkel von ca. 160° - 175°, wobei die Kegelachse die Hauptabstrahlrichtung der Lichtquelle (beispielsweise der Sekundärlichtquelle), insbesondere der LED-Lichtquelle darstellt.

Der Lichtleitkörper-Einkoppelbereich 11a ist nun vorzugsweise, wie in Figur 11 dargestellt, derart ausgebildet, dass das von der Sekundärlichtquelle 21, insbesondere LED-Lichtquelle, in den Lichtleitkörper 11 eingestrahlte Licht in eine Richtung parallel gerichtet wird. Bei dieser Richtung handelt es sich um die Haupt-Lichtausbreitungsrichtung S.

Der Einkoppelbereich 11a weist dazu eine Einkoppelstelle 111a auf, welche der Sekundärlichtquelle 21 unmittelbar zugewandt ist und über welche diese Licht in den Lichtleitkörper 11 einkoppelt. Die Einkoppelstelle 111a kann als Primäroptik ausgebildet sein.

Beispielsweise ist die Einkoppelstelle 111a als eine sich in Lichteinspeisrichtung bzw. Richtung S verjüngende Pyramide, mit ebenen oder gekrümmten Mantelflächen 113a, 114a und einer ebenen, oder ebenfalls gekrümmten, gegebenenfalls auch unstetigen Deckfläche 112a, ausgebildet. Figur 11a zeigt die Einkoppelstelle 111a noch in einer Ansicht von hinten.

Die Einkoppelstelle 111a ist grundsätzlich dazu eingerichtet, die eingekoppelten Lichtstrahlen parallel zu richten, wobei vorzugsweise auch wie in Figur 11 gezeigt die den Lichtleitkörper 11 unmittelbar an die Einkoppelstelle 111a anschließenden Begrenzungsflächen 115a, 116a entsprechend mitwirken können. Insbesondere die Mantelflächen 113a, 114a und die Flächen 115a, 116a sind entsprechend aufeinander abgestimmt, dass Licht parallel gerichtet wird.

Durch das Parallel-Richten kann Licht möglichst homogen aus dem Lichtleitkörper austreten.

Wieder zurückkommend auf Figur 8 ist außerdem noch zu erkennen, dass wie oben schon beschrieben das Lichtleitelement 1 eine Längsmittelachse X1 aufweist und dass die Haupt-Lichtausbreitungsrichtung S zu der Längsmittelachse X1 unter einem Verkipp-Winkel phi ungleich 0° verläuft.

Die Längsmittelachse ist bei einem geradlinig ausgebildeten Lichtleitelement (das Lichtleitelement bildet einen geraden Stab) eine Gerade. In diesem Fall ist der Verkipp-Winkel über den gesamten Lichtleitkörper konstant.

Typischer Weise ist allerdings das Lichtleitelement gekrümmt und somit ist auch die Längsmittelachse X1 gekrümmt. In diesem Fall variiert der Verkipp-Winkel phi bei einem Fortschreiten in Haupt-Lichtausbreitungsrichtung S. Der Verkipp-Winkel phi wird in diesem Fall in einem definierten Punkt pX1 der Längsmittelachse X1 angegeben, wie im Folgenden beschrieben.

Betrachtet man eine Trägerkurve TK (Figur 9), so wird durch den Anfangspunkt pTK der Trägerkurve TK, das ist der Punkt der Trägerkurve TK, der am nächsten bei der Sekundärlichtquelle 21 liegt, eine Normale nTK auf die Haupt-Lichtausbreitungsrichtung S errichtet.

Typischerweise, aber nicht notwendiger Weise, ist in diesem Anfangspunkt pTK die Haupt-Lichtausbreitungsrichtung S normal auf eine Normale an die Trägerkurve TK in diesem Punkt pTK. In diesem Fall fallen die Normale nTK auf die Lichteinkoppelrichtung S und die Normale an die Trägerkurve TK zusammen.

Die Normale nTK wird mit der Längsmittelachse X1 geschnitten, bei dem Schnittpunkt pX1 handelt es sich um den oben angesprochenen definierten Punkt pX1. In diesem Schnittpunkt pX1 wird eine Normale nX1 an die Längsmittelachse X1 gelegt. Der Winkel phi zwischen dieser Normalen nX1 und der Normalen nTK entspricht dem Winkel Verkipp-Winkel phi.

Insbesondere kann vorgesehen sein, dass der Verkipp-Winkel phi derart gewählt ist, dass mit zunehmendem Abstand von der Sekundäroptik 21 die Trägerkurve TK und die Längsmittelachse X1 aufeinander zulaufen. Die Sekundäroptik 21 ist bzw. die Sekundäroptiken sind also vorzugsweise auf das Lichtleitelement hin wie in den Figuren gezeigt gerichtet.

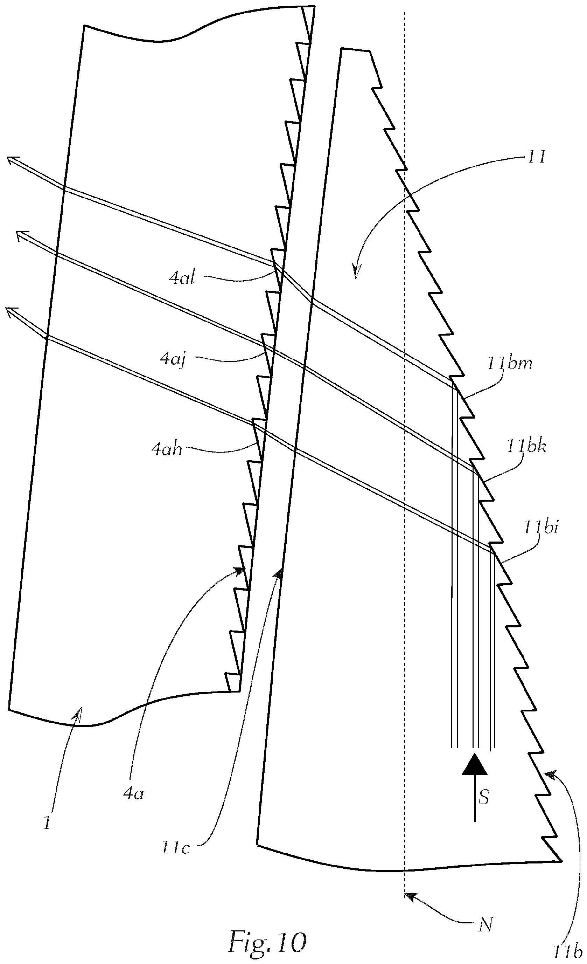

Figur 10 zeigt noch eine Abstimmung der Umlenkelemente, insbesondere der prismatischen Umlenkelemente der Lichtleitkörper-Umlenkfläche 11b und der Umlenkelemente, insbesondere der prismatischen Umlenkelemente der Lichtumlenkfläche 4a des Lichtleiters 1. Wie Figur 10 zu erkennen ist, ist vorzugsweise vorgesehen, dass Licht, dass von einem diskreten Umlenkelement 11bi, 11bk, 11bm der Lichtleitkörper-Umlenkfläche 11b reflektiertes Licht genau durch ein diskretes, zugeordnetes Umlenkelement 4ah, 4aj, 4al der Lichtumlenkfläche 4a des Lichtleiters 1 durchtritt. Vorzugsweise ist dabei die Anordnung derart gewählt, dass kein Überkreuzen von Lichtstrahlen eines zusammengehörigen Umlenkelement-Paares mit den Lichtstrahlen eines anderen Paares erfolgt. Damit kann Streulicht vermindert und die Effizienz optimiert werden.

Die Figuren zeigen eine Lichtleiteranordnung für einen linken Fahrzeugscheinwerfer, die Primär-Lichtquelle 10 sitzt fahrzeugseitig Außen, der Lichtleitkörper 11 fahrzeugseitig Innen. Die Primärlichtquelle kann auch Innen sitzen, oder es kann Außen und Innen einer Primärlichtquelle vorgesehen sein.

Durch Ein- und Ausschalten der Primärlichtquelle 10 blinkt das Lichtleitelement 1, sodass eine bekannte Blinklichtfunktion (Fahrtrichtungsanzeiger) erzeugt werden kann, dies ergibt einen (bekannten) Fahrtrichtungsanzeiger in einer Basisversion.

Mit den Lichtleitkörper 11 - 14 kann eine Wischblinkfunktion realisiert werden. Dabei muss sich das Wischblink-Licht von innen nach außen bewegen, d.h. beginnend bei der Sekundärlichtquelle 21, welche als erste eingeschaltet wird, werden der Reihe nach die weiteren Sekundärlichtquelle 22, 23, 24 dazugeschaltet, wodurch auch die Abbiegerichtung angezeigt wird.

Der Schaltablauf ist dabei der folgende: innerste Sekundärlichtquelle 21 - Sekundärlichtquelle 22 Sekundärlichtquelle 23 - Sekundärlichtquelle 24 - Hauptlichtquelle 10.

Beim Aktivieren einer nächsten Sekundärlichtquelle bleiben die bereits eingeschalteten Zusatzlichtquellen an.

Figur 12 zeigt die leuchtenden Teilbereich V-X, V-A - V-D als Funktion der Zeit t mit den Schaltzeitpunkten t₁ - t₆.

## Patentansprüche

1. Lichtleiteranordnung (100) zur Erzeugung von zumindest einer Beleuchtungsfunktion und/oder Signalisierungsfunktion eines Kraftfahrzeugscheinwerfers oder von zumindest einer Beleuchtungsfunktion und/oder Signalisierungsfunktion einer Beleuchtungsvorrichtung für einen Kraftfahrzeugscheinwerfer, wobei die Lichtleiteranordnung (100) umfasst:
- ein langgestrecktes Lichtleitelement (1) und
- zumindest eine Primärlichtquelle (10), wobei Licht der Primärlichtquelle (10) über zumindest einen Einkoppelbereich (2) an einem Ende des Lichtleitelementes (1) in das Lichtleitelement (1) eingekoppelt werden kann,
wobei das Lichtleitelement (1)
- an seiner Vorderseite (3) eine Lichtauskoppelfläche (3a) und
- an seiner gegenüberliegenden Rückseite (4) eine Lichtumlenkfläche (4a) aufweist, sodass
von der zumindest einen Primärlichtquelle (10) in das Lichtleitelement (1) eingekoppeltes Licht an der Lichtumlenkfläche (4a) umgelenkt und über die Lichtauskoppelfläche (3a) aus dem Lichtleitelement (1) abgestrahlt wird, sodass eine Primär-Lichtverteilung (V-X) erzeugt werden kann, und wobei
- entlang der Rückseite (4) des Lichtleitelementes (1) zwei oder mehrere Lichtleitkörper (11, 12, 13, 14) vorgesehen sind,
- wobei jedem Lichtleitkörper (11, 12, 13, 14) zumindest eine Sekundärlichtquelle (21, 22, 23, 24) zugeordnet ist, mit welcher Sekundärlichtquelle (21, 22, 23, 24) Licht in den zugeordneten Lichtleitkörper (11, 12, 13, 14) über einen Lichtleitkörper-Einkoppelbereich (11a, 12a, 13a, 14a) eingekoppelt und vorzugsweise parallel gerichtet werden kann, und wobei
- eingekoppeltes Licht an einer Lichtleitkörper-Umlenkfläche (11b, 12b, 13b, 14b) zu einer Lichtleitkörper-Auskoppelfläche (11c, 12c, 13c, 14c) umgelenkt wird und aus dieser aus dem Lichtleitkörper (11, 12, 13, 14) austritt, sodass mit jedem Lichtleitkörper (11, 12, 13, 14) eine Sekundär-Lichtverteilung (V-A, V-B, V-C, V-D) erzeugt werden kann,
und wobei die Lichtleitkörper-Auskoppelflächen (11c, 12c, 13c, 14c) der zwei oder mehreren Lichtleitkörper (11, 12, 13, 14) der Rückseite (4) des Lichtleitelementes (1) gegenüber liegen,
und wobei aus einem Lichtleitkörper (11, 12, 13, 14) austretendes Licht über die Rückseite (4) des Lichtleitelementes (1) in dieses eintritt, das Lichtleitelement (1) durchquert und über die Vorderseite (3) des Lichtleitelementes (1) austritt,
und wobei die Sekundärlichtquellen (21, 22, 23, 24) Licht jeweils in einer Hauptabstrahlrichtung emittieren und in die Lichtleitkörper-Einkoppelbereiche (11a, 12a, 13a, 14a) einkoppeln können,
**dadurch gekennzeichnet, dass**
die Hauptabstrahlrichtungen der Sekundärlichtquellen (21, 22, 23, 24) in einem Nachbarbereich des Lichtleitelementes (1) zu der jeweiligen Sekundärlichtquelle (21, 22, 23, 24) jeweils in etwa der Richtung einer Längsmittelachse (X1) des Lichtleitelementes (1) entsprechen, und
dass die Lichtleitkörper (11, 12, 13, 14) derart ausgebildet und angeordnet sind, dass benachbarte Lichtleitkörper (11, 12, 13, 14) zumindest im Bereich der Lichtleitkörper-Auskoppelflächen (11c, 12c, 13c, 14c) unmittelbar aneinander angrenzen oder in einem geringen Abstand zueinander angeordnet sind, und
dass Licht, welches im Lichtleitkörper-Einkoppelbereich (11a, 12a, 13a) eines Lichtleitkörpers (11, 12,13) von der Lichtleitkörper-Umlenkfläche (11b, 12b, 13b) umgelenkt wird, zumindest teilweise über eine den Lichtleitkörper-Einkoppelbereich (11a) begrenzende Lichtleitkörper-Einkoppelbereichsfläche (11a') austritt, in den benachbarten Lichtleitkörper (12) eintritt, diesen durchquert und durch das Lichtleitelement (1) durch abgestrahlt wird.

2. Lichtleiteranordnung nach Anspruch 1, **dadurch gekennzeichnet, dass** die Hauptabstrahlrichtung der Sekundärlichtquellen (21, 22, 23, 24) im jeweiligen Nachbarbereich parallel zu der Längsmittelachse (X1) des Lichtleitelementes (1) verläuft, oder dass die Hauptabstrahlrichtung zu der Längsmittelachse (X1) unter einem Verkipp-Winkel (phi) ungleich 0° verläuft.

3. Lichtleiteranordnung nach Anspruch 2, **dadurch gekennzeichnet, dass** der Verkippwinkel (phi) größer 0° und kleiner 10° ist.

4. Lichtleiteranordnung nach Anspruch 3, **dadurch gekennzeichnet, dass** der Verkippwinkel (phi) größer 0° und kleiner 5° ist, vorzugsweise ca. 4° beträgt.

5. Lichtleiteranordnung nach einem der Ansprüche 1 bis 4, **dadurch gekennzeichnet, dass** aneinander angrenzende bzw. nebeneinander liegende Lichtleitkörper-Auskoppelflächen (11c, 12c, 13c, 14c) stufenlos ineinander übergehen.

6. Lichtleiteranordnung nach einem der Ansprüche 1 bis 5, **dadurch gekennzeichnet, dass** aneinander angrenzende oder nebeneinander liegende Lichtleitkörper-Auskoppelflächen (11c, 12c, 13c, 14c) stetig ineinander übergehen.

7. Lichtleiteranordnung nach einem der Ansprüche 1 bis 6, **dadurch gekennzeichnet, dass** zumindest bei jenem Lichtleitkörper bzw. jenen Lichtleitkörpern (12, 13, 14), welcher/welche im Bereich seines/ihrer Lichtleitkörper-Einkoppelbereiche(s) (12a, 13a, 14a) an einen Endbereich (11d, 12d, 13d) eines benachbarten Lichtleitkörpers (11, 12, 13) angrenzt/angrenzen, der Lichtleitkörper-Einkoppelbereich (12a, 13a, 14a) quer zu einer Haupt-Lichtausbreitungsrichtung (S) von der Lichtleiterkörper-Auskoppelfläche (12c, 13c, 14c) beabstandet ist und sich entgegen der Haupt-Lichtausbreitungsrichtung (S) weg erstreckt, sodass zwischen dem Lichtleiterkörper-Einkoppelbereich (12a, 13a, 14a) eines Lichtleitkörpers (12,13,14) und dem Lichtleitelement (1) eine Aussparung gebildet ist, in welcher Aussparung der Endbereich (11d, 12d, 13d) des zu dem Lichtleitkörper (12, 13, 14) unmittelbar benachbarten Lichtleitkörpers (11, 12, 13) angeordnet ist.

8. Lichtleiteranordnung nach einem der Ansprüche 1 bis 7, **dadurch gekennzeichnet, dass** der oder die Lichtleitkörper (11) jeweils aus einem Auskoppelkörper (11') und einem mit diesem, vorzugsweise einstückig, verbundenen Einkoppelkörper (11"), in welchem der Einkoppelbereich (11a) ausgebildet ist, bestehen, wobei der Einkoppelkörper (11") von dem Endbereich (11d) des Lichtleitkörpers (11), welcher Endbereich (11d) vorzugsweise Teil des Auskoppelkörpers (11') ist, weggerichtet ist und sich der Einkoppelkörper (11"), insbesondere eine den Einkoppelkörper (11") begrenzende Einkoppelkörper-Fläche (11a'), in einem Abstand zu einer von dem Endbereich (11d) weg gerichteten, gedachten Verlängerung der Auskoppelfläche (11c) befindet.

9. Lichtleiteranordnung nach Anspruch 8, **dadurch gekennzeichnet, dass** die den Auskoppelkörper (11') eines Lichtleitkörpers (11) zu der Aussparung hin begrenzende Oberfläche (11'a) deckungsgleich zu der den Endbereich (12d) des benachbarten Lichtleitkörpers (12) begrenzenden Oberfläche (12'a) ausgebildet ist.

10. Lichtleiteranordnung nach einem der Ansprüche 1 bis 9, **dadurch gekennzeichnet, dass** die zumindest eine Primärlichtquelle (10) zusammen mit dem Lichtleitelement (1) zur Erzeugung einer Haupt-Signallichtfunktion, z.B. einer Blinklicht-Funktion, vorgesehen ist.

11. Lichtleiteranordnung nach einem der Ansprüche 1 bis 10, **dadurch gekennzeichnet, dass** die eine oder die mehreren Sekundärlichtquellen (21, 22, 23, 24) und die zugeordneten Lichtleitkörper (11, 12, 13, 14) zur Erzeugung einer Zusatz-Signallichtfunktion, z.B. einer Wischblinkerfunktion, vorgesehen sind.

12. Lichtleiteranordnung nach einem der Ansprüche 1 bis 11, **dadurch gekennzeichnet, dass** eine oder die mehreren Sekundärlichtquellen (21, 22, 23, 24) unabhängig voneinander und/oder unabhängig von der zumindest einen Primärlichtquelle (10) ansteuerbar sind.

13. Lichtleiteranordnung nach einem der Ansprüche 1 bis 12, **dadurch gekennzeichnet, dass** zumindest eine weitere Primärlichtquelle vorgesehen ist, deren Licht über einen weiteren Einkoppelbereich an einem dem ersten Einkoppelbereich (3) gegenüberliegenden Ende des Lichtleitelementes (2) in dieses eingekoppelt werden kann, wobei vorzugsweise alle Primärlichtquellen (10) zu einer Haupt-Signallichtfunktion, z.B. einer Blinklicht-Funktion, beitragen.

14. Lichtleiteranordnung nach einem der Ansprüche 1 bis 13, **dadurch gekennzeichnet, dass** die zumindest eine Primär-Lichtquelle oder jede Primär-Lichtquelle und/oder zumindest eine, vorzugsweise jede Sekundär-Lichtquelle, eine LED-Lichtquelle ist bzw. LED-Lichtquellen sind, wobei eine LED-Lichtquelle eine oder mehrere Leuchtdioden umfasst.

15. Lichtleiteranordnung nach einem der Ansprüche 1 bis 14, **dadurch gekennzeichnet, dass** die zumindest eine Primär-Lichtquelle oder jede Primär-Lichtquelle und/oder zumindest eine, vorzugsweise jede Sekundär-Lichtquelle, eine Laser-Lichtquelle umfasst, wobei der lichtemittierende einer Laser-Lichtquelle von zumindest einem Licht-Emissionsbereich zumindest eines Konversionselementes der Laserlichtquelle gebildet ist.

16. Beleuchtungsvorrichtung für einen Kraftfahrzeugscheinwerfer, wobei die Beleuchtungsvorrichtung zumindest eine Lichtleiteranordnung (1) nach einem der Ansprüche 1 bis 15 umfasst.

17. Kraftfahrzeugscheinwerfer mit zumindest einer Beleuchtungsvorrichtung nach Anspruch 16 bzw. mit zumindest einer Lichtleiteranordnung (1) nach einem der Ansprüche 1 bis 15.

## Claims

1. Light guide arrangement (100) for generating at least one illumination function and/or signalling function of a motor vehicle headlamp or at least one illumination function and/or signalling function of an illumination device for a motor vehicle headlamp, the light guide arrangement (100) comprising
- an elongate light guide element (1), and
- at least one primary light source (10), wherein light from the at least one primary light source (10) can be coupled into the light guide element (1) via at least one coupling region (2) located at an end of the light guide element (1),
wherein the light guide element (1) comprises
- a light coupling-out surface (3a) at its front side (3) and
- a light deflecting surface (4a) at its back side (4) opposite thereto,
so that light from the at least one primary light source (10) coupled into the light guide element (1) is deflected at the light deflecting surface (4a) and is emitted via the light coupling-out surface (3a) from the light guide element (1) so as to enable generating a primary light distribution (V-X), and wherein
- two or more light guide bodies (11, 12, 13, 14) are provided along the back side (4) of the light guide element (1),
- wherein to each light guide body (11, 12, 13, 14) at least one secondary light source (21, 22, 23, 24) is assigned, wherein with said secondary light source (21, 22, 23, 24) light can be coupled into the light guide body (11, 12, 13, 14) assigned thereto via a light guide body coupling region (11a, 12a, 13a, 14a) and preferably aligned parallel, and wherein
- coupled light is deflected at a light guide body deflecting surface (11b, 12b, 13b, 14b) towards a light guide body coupling-out surface (11c, 12c, 13c, 14c) and emerges from there from the light guide body (11, 12, 13, 14), so as to enable generating a secondary light distribution (V-A, V-B, V-C, V-D) with each light guide body (11, 12, 13, 14),
and wherein the light guide body coupling-out surfaces (11c, 12c, 13c, 14c) of the two or more light guide bodies (11, 12, 13, 14) are located opposite to the rear side (4) of the light guide element (1),
and wherein light emerging from a light guide body (11, 12, 13, 14) enters the light guide element (1) via the back side (4) thereof, traverses the light guide element (1) and emerges via the front side (3) of the light guide element (1),
and wherein the secondary light sources (21, 22, 23, 24) emit light along respective main radiation directions and can couple light into the light guide coupling regions (11a, 12a, 13a, 14a), **characterised in that**
the main radiation directions of the secondary light sources (21, 22, 23, 24) respectively correspond approximately to the direction of a central longitudinal axis (X1) of the light guide element (1), in an adjacent region of the light guide element (1) to the respective secondary light source (21, 22, 23, 24), and
the light guide bodies (11, 12, 13, 14) are configured and arranged such that adjacent light guide bodies (11, 12, 13, 14) are immediately abutting one another or arranged at a small distance to each other at least in the region of the light guide body coupling-out surfaces (11c, 12c, 13c, 14c), and light which is deflected by the light guide body deflecting surface (11b, 12b, 13b) in the light guide body coupling region (11a, 12a, 13a) of a light guide body (11, 12, 13) emerges at least partially via a light guide body coupling region surface (11a') bounding the light guide body coupling region (11a), enters the light guide body (12) adjacent thereto, traverses it and is emitted through the light guide element (1).

2. Light guide arrangement according to claim 1, **characterised in that** the main radiation directions of the secondary light sources (21, 22, 23, 24) extend, in the respective adjacent region, parallel to the central longitudinal axis (X1) of the light guide element (1), or the main radiation direction is oriented at a tilt angle (phi) different from 0° to the central longitudinal axis (X1).

3. Light guide arrangement according to claim 2, **characterised in that** the tilt angle (phi) is greater than 0° and less than 10°.

4. Light guide arrangement according to claim 3, **characterised in that** the tilt angle (phi) is greater than 0° and less than 5°, preferably about 4°.

5. Light guide arrangement according to any one of claims 1 to 4, **characterised in that** adjoining or adjacent light guide body coupling-out surfaces (11c, 12c, 13c, 14c) merge into one another in a continuous manner.

6. Light guide arrangement according to any one of the claims 1 to 5, **characterised in that** adjoining or adjacent light guide body coupling-out surfaces (11c, 12c, 13c, 14c) steplessly merge into one another.

7. Light guide arrangement according to any one of the claims 1 to 6, **characterised in that** at least with regard to the light guide body or bodies which, in the region of the light guide body coupling region(s) (12a, 13a, 14a) thereof, are adjoining to an end region (11d, 12d, 13d) of an adjacent light guide body (11, 12, 13), the light guide body coupling-in region (12a, 13a, 14a) is at a distance to the light guide body coupling-out surface (12c, 13c, 14c) transversely to a main light propagation direction (S) and extends opposite to the main light propagation direction (S), thus forming a recess between the light guide body coupling region (12a, 13a, 14a) of a light guide body (12, 13, 14) and the light guide element (1), the end region (11d, 12d, 13d) of the light guide body (11, 12, 13) directly adjacent to the light guide body (12, 13, 14) being disposed in said recess.

8. Light guide arrangement according to any one of claims 1 to 7, **characterised in that** the light guide body or bodies (11) respectively consists of a coupling-out body (11') and a coupling-in body (11") connected thereto, preferably integrally, in which the coupling region (11a) is formed, wherein the coupling-in body (11") is directed away from the end region (11d) of the light guide body (11), which end region (11d) is preferably part of the coupling-out body (11'), and the coupling-in body (11"), in particular an coupling surface (11a') delimiting the coupling-in body (11"), is located at a distance from an imaginary prolongation of the coupling-out surface (11c) away from the end region (11d).

9. Light guide arrangement according to claim 8, **characterised in that** the surface (11'a) delimiting the coupling-out body (11') of a light guide body (11) towards the recess is shaped congruent with the surface (12'a) delimiting the end region (12d) of the adjacent light guide body (12).

10. Light guide arrangement according to any one of claims 1 to 9, **characterised in that** the at least one primary light source (10), in conjunction with the light guide element (1), is intended for generating a main signal light function, e.g. a flashing light function.

11. Light guide arrangement according to any one of claims 1 to 10, **characterised in that** the one or more secondary light sources (21, 22, 23, 24) and the light guide bodies (11, 12, 13, 14) associated thereto are intended for generating an additional signal light function, e.g. a wiping flasher function.

12. Light guide arrangement according to any one of claims 1 to 11, **characterised in that** one or more secondary light sources (21, 22, 23, 24) are controllable independently of each other and/or independently of the at least one primary light source (10).

13. Light guide arrangement according to any one of claims 1 to 12, **characterised in that** at least one additional primary light source is provided, the light of which can be coupled into the light guide element (2) via an additional coupling region at an end thereof opposite the first coupling region (3), wherein preferably all primary light sources (10) contribute to a main signal light function, e.g. a flashing light function.

14. Light guide arrangement according to any one of claims 1 to 13, **characterised in that** the at least one primary light source or each primary light source and/or at least one, preferably each, secondary light source is/are realized as LED light source(s), wherein a LED light source comprises one or more light emitting diodes.

15. Light guide arrangement according to any one of claims 1 to 14, **characterized in that** the at least one primary light source or each primary light source and/or at least one, preferably each, secondary light source comprises a laser light source, the light emitting part of a laser light source being formed by at least one light emission region of at least one conversion element of the laser light source.

16. Lighting device for a motor vehicle headlamp, the lighting device comprising at least one light guide arrangement (1) according to any one of claims 1 to 15.

17. Motor vehicle headlamp comprising at least one lighting device according to claim 16 or at least one light guide arrangement (1) according to any one of claims 1 to 15.

## Revendications

1. Dispositif de guidage de lumière (100) pour générer au moins une fonction d'éclairage et/ou de signalisation d'un projecteur de véhicule automobile ou au moins une fonction d'éclairage et/ou de signalisation d'un dispositif d'éclairage pour un projecteur de véhicule automobile, le dispositif de guidage de lumière (100) comprenant
- un élément de guidage de lumière (1) allongé, et
- au moins une source de lumière primaire (10), de la lumière de la source de lumière primaire (10) pouvant être couplée dans l'élément de guidage de lumière (1) par l'intermédiaire d'au moins une région de couplage (2) située à une extrémité de l'élément de guidage de lumière (1),
l'élément de guidage de lumière (1) comportant
- une surface d'extraction de lumière (3a) à sa face avant (3) et
- une surface de déviation de lumière (4a) à sa face arrière (4) opposée à sa face avant,
de sorte que de la lumière couplée dans l'élément de guidage de lumière (1) par ladite au moins une source de lumière primaire (10) est déviée au niveau de la surface de déviation de la lumière (4a) et émise par l'élément de guidage de lumière (1) par l'intermédiaire de la surface d'extraction de la lumière (3a) de sorte qu'une distribution de lumière primaire (V-X) peut être générée, et
- deux ou plusieurs corps de guidage de lumière (11, 12, 13, 14) étant prévus le long de la face arrière (4) de l'élément de guidage de lumière (1),
- à chaque corps de guidage de lumière (11, 12, 13, 14) étant associée au moins une source de lumière secondaire (21, 22, 23, 24), et avec ladite source de lumière secondaire, de la lumière pouvant être couplée dans le corps de guidage de lumière associé (11, 12, 13, 14) par l'intermédiaire d'une région de couplage de corps de guidage de lumière (11a, 12a, 13a, 14a) et de préférence collimée parallèlement, et
- de la lumière couplée étant déviée au niveau d'une surface de déviation du corps de guidage de lumière (11b, 12b, 13b, 14b) vers une surface d'extraction du corps de guidage de lumière (11c, 12c, 13c, 14c) et émerge de la dernière du corps de guidage de lumière (11, 12, 13, 14), de sorte qu'une distribution de lumière secondaire (V-A, V-B, V-C, V-D) peut être générée avec chaque corps de guidage de lumière (11, 12, 13, 14),
et les surface d'extraction des corps de guidage de lumière (11c, 12c, 13c, 14c) des deux ou plusieurs corps de guidage de lumière (11, 12, 13, 14) étant opposées à la face arrière (4) de l'élément de guidage de lumière (1),
et de la lumière qui sort d'un corps de guidage de lumière (11, 12, 13, 14) entrant dans l'élément de guidage de lumière (1) par la face arrière (4) du dernier, traversant l'élément de guidage de lumière (1) et sortant par la face avant (3) de l'élément de guidage de lumière (1),
et les sources de lumière secondaires (21, 22, 23, 24) émettant de la lumière respectivement dans une direction de rayonnement principale en le couplant dans les régions de couplage des corps de guidage de lumière (11a, 12a, 13a, 14a),
**caractérisé en ce que**
les directions de rayonnement principales des sources de lumière secondaires (21, 22, 23, 24) dans une région adjacente à l'élément de guidage de lumière (1) vers la source de lumière secondaire respective (21, 22, 23, 24) correspondent chacune approximativement à la direction d'un axe central longitudinal (X1) de l'élément de guidage de lumière (1), et
**en ce que** les corps de guidage de lumière (11, 12, 13, 14) sont conçus et disposés de telle sorte que des corps de guidage de lumière (11, 12, 13, 14) voisins sont directement contigus ou sont disposés à faible distance les uns des autres au moins dans la région des surfaces d'extraction du corps de guidage de lumière (11c, 12c, 13c, 14c), et **en ce que** la lumière qui est déviée dans les régions de couplage des corps de guidage de lumière (11a, 12a, 13a) d'un corps de guidage de lumière (11, 12, 13) par la surface de déviation (11b, 12b, 13b) du corps de guidage de lumière sort au moins partiellement par une surface couplage (11a') de la région de couplage du corps de guidage de lumière qui délimite la région de couplage (11a) du corps de guidage de lumière, entre dans le corps de guidage de lumière (12) voisin, le traverse et est émise par l'élément de guidage de lumière (1).

2. Dispositif de guidage de lumière selon la revendication 1, **caractérisé en ce que** la direction de rayonnement principale des sources de lumière secondaires (21, 22, 23, 24), dans la région voisine respective, s'étend parallèlement à l'axe central longitudinal (X1) de l'élément de guidage de lumière (1), ou **en ce que** la direction de rayonnement principale s'étend avec un angle d'inclinaison (phi) différent de 0° par rapport à l'axe central longitudinal (X1).

3. Dispositif de guidage de lumière selon la revendication 2, **caractérisée en ce que** l'angle d'inclinaison (phi) est supérieur à 0° et inférieur à 10°.

4. Dispositif de guidage de lumière selon la revendication 3, **caractérisée en ce que** l'angle d'inclinaison (phi) est supérieur à 0° et inférieur à 5°, de préférence d'environ 4°.

5. Dispositif de guidage de lumière selon l'une quelconque des revendications 1 à 4, **caractérisée en ce que** les surfaces d'extraction du corps de guidage de lumière adjacentes ou voisines (11c, 12c, 13c, 14c) sont continu les unes aux autres.

6. Dispositif de guidage de lumière selon l'une quelconque des revendications 1 à 5, **caractérisé en ce que** des surfaces de couplage de corps de guidage de lumière adjacents ou voisins (11c, 12c, 13c, 14c) se confondent en continu les unes avec les autres.

7. Dispositif de guidage de lumière selon l'une quelconque des revendications 1 à 6, **caractérisé en ce qu'**au moins dans le cas de ce ou ces corps de guidage de lumière qui est/sont adjacents à une zone d'extrémité (11d, 12d, 13d) d'un corps de guidage de lumière (11, 12, 13) voisin dans la région de sa région/leurs régions de couplage de corps de guidage de lumière (12a, 13a, 14a), la région de couplage de corps de guidage de lumière (12a, 13a, 14a) est espacée de la surface d'extraction de corps de guidage de lumière (12c, 13c, 14c) à une distance transversalement à une direction principale de propagation de la lumière (S) et s'étend en s'éloignant de la direction principale de propagation de la lumière (S), de sorte qu'un évidement est formé entre la région de couplage (12a, 13a, 14a) d'un corps de guidage de lumière (12, 13, 14) et l'élément de guidage de lumière (1), dans ledit évidement étant disposée la zone d'extrémité (11d, 12d, 13d) du corps de guidage de lumière (11, 12, 13) directement adjacente au corps de guidage de lumière (12, 13, 14).

8. Dispositif de guidage de lumière selon l'une quelconque des revendications 1 à 7, **caractérisé en ce que** ledit ou lesdits corps de guidage de lumière (11) se composent chacun d'un corps d'extraction (11') et d'un corps de couplage (11") relié au dernier de préférence intégralement, dans lequel la région de couplage (11a) est prévue, le corps de couplage (11") étant orienté s'éloignant de la zone d'extrémité (11d) du corps de guidage de lumière (11), ladite zone de préférence faisant partie du corps d'extraction (11'), et le corps de couplage (11"), en particulier une surface de couplage (11a') délimitant le corps de couplage (11"), étant situé à une distance d'une extension imaginaire de la surface d'extraction (11c) dirigée en s'èloignant la région d'extrémité (11d).

9. Dispositif de guidage de lumière selon la revendication 8, **caractérisé en ce que** la surface (11'a) délimitant le corps d'extraction (11') d'un corps de guidage de lumière (11) vers l'évidement est formée de manière congruente avec la surface (12'a) délimitant la zone d'extrémité (12d) du corps de guidage de lumière (12) adjacent.

10. Dispositif de guidage de lumière selon l'une quelconque des revendications 1 à 9, **caractérisé en ce que** ladite au moins une source de lumière primaire (10) est prévue avec l'élément de guidage de lumière (1) pour générer une fonction de lumière de signalisation principale, par exemple une fonction de lumière clignotante.

11. Dispositif de guidage de lumière selon l'une quelconque des revendications 1 à 10, **caractérisé en ce qu'**une ou plusieurs sources de lumière secondaires (21, 22, 23, 24) et les corps de guidage de lumière associés (11, 12, 13, 14) sont prévus pour générer une fonction de signal lumineux supplémentaire, par exemple une fonction de clignotant d'essuyage.

12. Dispositif de guidage de lumière selon l'une quelconque des revendications 1 à 11, **caractérisé en ce qu'**une ou plusieurs sources de lumière secondaires (21, 22, 23, 24) peuvent être commandées indépendamment les unes des autres et/ou indépendamment de ladite au moins une source de lumière primaire (10).

13. Dispositif de guidage de lumière selon l'une quelconque des revendications 1 à 12, **caractérisé en ce qu'**au moins une autre source de lumière primaire est prévu, dont la lumière peut être couplée par l'intermédiaire d'une autre région de couplage dans l'élément de guidage de lumière (2) à une extrémité du dernier opposée à la première région de couplage (3), de préférence toutes les sources de lumière primaires (10) contribuant à une fonction de lumière de signalisation principale, par exemple une fonction de lumière clignotante.

14. Dispositif de guidage de lumière selon l'une quelconque des revendications 1 à 13, **caractérisée en ce que** ladite au moins une source de lumière primaire ou chaque source de lumière primaire et/ou au moins une, de préférence chaque, source de lumière secondaire est/sont une source de lumière à LED ou des sources de lumière à LED, une source de lumière à LED comportant une ou plusieurs diodes électroluminescentes.

15. Dispositif de guidage de lumière selon l'une quelconque des revendications 1 à 14, **caractérisé en ce que** ladite au moins une source de lumière primaire ou chaque source de lumière primaire et/ou au moins une, de préférence chaque, source de lumière secondaire comporte (nt) une source de lumière laser, la partie émittant de la lumière d'une source de lumière laser étant formée par au moins une région d'émission de lumière d'au moins un élément de conversion de la source de lumière laser.

16. Dispositif d'éclairage pour un projecteur de véhicule automobile, le dispositif d'éclairage comprenant au moins un dispositif de guidage de lumière (1) selon l'une quelconque des revendications 1 à 15.

17. Projecteur de véhicule automobile comportant au moins un dispositif d'éclairage selon la revendication 16 ou comportant au moins un dispositif de guidage de lumière (1) selon l'une quelconque des revendications 1 à 15.
